# EUROPEAN PATENT SPECIFICATION

(11) **EP 2 835 402 B1**
(45) Date of publication and mention of the grant of the patent: **08.07.2020**
(21) Application number: 13179954.6
(22) Date of filing: 09.08.2013
(51) Int. Cl.: C09C 1/62, B82Y 30/00, C09C 3/12, B01J 13/00, B22F 1/00, B22F 9/24, B82Y 40/00, C09D 5/24, C09D 5/38, C09D 7/62

(54) **Formation of surface modified metal colloids**
Bildung von oberflächenmodifizierten Metallkolloiden
Formation de colloïdes métalliques à surface modifiée

(43) Date of publication of application: 11.02.2015
(73) Proprietor: Leibniz-Institut für Neue Materialien gemeinnützige GmbH, 66123 Saarbrücken (DE)
(72) Inventor: Becker-Willinger, Carsten, Dr., 66130 Saarbrücken (DE); Ali, Budiman, Dr., 66117 Saarbrücken (DE); Bukowski, Mirko, 66386 St. Ingbert (DE); Jochum, Marlon, 66646 Marpingen (DE); Taylor, Alan, Dr., Bluntisham, Cambridgeshire PE28 3LP (GB); Durand, Géraldine, Dr., Cambridge CB5 8LF (GB)
(74) Representative: Patentanwälte Gierlich & Pischitzis Partnerschaft mbB

(56) References cited:
- WO-A1-2012/045004
- JP-A- 2005 320 615
- US-A1- 2008 083 299

## Description

### FIELD OF THE INVENTION

The present invention is related to formation of functional surface modified metal colloids suitable as master batch for direct use in lacquers, paints, coatings and inks. The particles can be specifically designed for the relevant metal core and for linking possibility to a substrate or binding matrix without complex or cost intensive production steps and are available in different surrounding solvent matrix systems.

### DESCRIPTION OF RELATED ART

The state of the art shows a lot of approaches of formation of metal-colloids via reduction processes.

[EP 0426300 B1] describes a method of producing a reagent containing a narrow distribution of colloidal particles of a selected size. The reduction process is performed starting from a metal, a first reducing agent and a stabilising agent containing solution to form nuclei and subsequently applying a second reducing agent wherein the first reducing agent is selected in such a way that in the second reducing step it is not producing nuclei and will not retard growth of nuclei in the subsequent particle growth step and said second reducing agent retards spontaneous enucleation. The disadvantage of this multistep process is that it is rather complicated as the resulting particles are specially designed to be used in immunoassays where the narrow particle size distribution is a significant requirement. Furthermore the particle surface is specifically designed to be only suitable to interact with proteins and antibodies.

[EP 1787742 A1, EP 2452767 A1] claims copper microparticles and a process for producing the same starting from mixing copper oxide with a reducing agent such as e.g. hydrazine, a complexing agent such as e.g. citric acid or cysteine and a protein protective agent. Copper microparticles are demanded which contain substantially no agglomerated particles, are regular in shape and excellent in dispersibility and can be produced in a mass production process. A specific functionalization to tailor the particle surface is not intended and not achieved.

Special stabilisation mechanisms for metal colloids are followed in [EP 0796147 B1] using surfactants with strong hydrophilicity such as e.g. amphiphilic betains or fatty alcohol polyglycol ethers. Such surfactant type stabilisation is a small molecule surface modification mechanism and is only suitable for water as solvent. A more super lattice type structure is achieved in [DE 19506113 A1] starting from micelles out of block-copolymers having a block with pendent amine groups suitable to bind to the colloidal metal which is formed via in-situ reduction in the micelles and a second block compatible with the surrounding solvent. The result is a core-shell type particle with inorganic core and organic polymer shell. [DE 102006017696 A1] describes a comparable approach using water soluble homopolymers to produce highly concentrated metal colloid sols starting from metal salts in strongly basic medium.

The use of thiol containing compounds to stabilise metal colloids is a common approach. Usually low molecular weight compounds are applied such as e.g. organic mercaptans [WO 2010035258 A2] or cysteine [EP 1787742 A1, EP 2452767 A1, WO 2010035258 A2]. In these cases also no super lattice type structure is achieved.

Preformed metal colloids have also been functionalised and stabilised with mercapto silanes with the mercapto group having affinity to the metal mainly to provide a seed layer on the colloid surface that allows growing inorganic sol-gel derived shells like e.g. silica in order to build a core-shell type structure where the shell is shielding the core against oxidation or chemical attack [EP 1034234 B1]. On the colloid surface a plurality of reactive silane groups remains directly after the functionalization process so that the amount of available groups is somehow the result of a random process. The document JP 2005-320615 discloses colloidal metal particles modified with basket type silsesquioxanes.
The document WO 2012/045004 A1 discloses metal nanoparticles-containing silicone compositions reduced with SiH-containing compounds.

### Problem

In order to avoid the drawbacks of the approaches mentioned in the state of the art the task of the present invention was the formation of metal-colloids with tailored functionality and well defined amount of functional groups that can be applied as master batches for direct use in functional wet-coating, powder coating, compounding formulations and inks.

### Solution

The problem is solved by a method for production of surface modified metal-colloids comprising the following steps:
a) mixing at least one metal salt, at least one organosilsesquioxane having at least one functional group affine to the metal of said metal salt and at least one further group; at least one reducing agent and at least one solvent;
b) thermal and/or photochemical treatment to induce the reducing of the metal of the metal salt;
c) formation of metal colloids surface modified with the at least one organosilsesquioxane;
or
a) disperging at least one metal colloid in at least one solvent;
b) adding at least one organosilsesquioxane having at least one functional group affine to the metal colloid and at least one further group,
wherein the at least one organosilsesquioxane in a) (first alternative) is produced, by hydrolysis, wherein prior to complete condensation the condensation is quenched with an excess of water, and for both alternatives wherein the organosilsesquioxane comprises at least two different non-hydrolysable groups bound to different Si-atoms of the silsesquioxanes and wherein the reduction agent is selected from the group comprising hydrazine or hydrazine derivatives, borohydrides, ascorbic acid, malic acid, oxalic acid, formic acid, citric acid, salts thereof, Na₂SO₃, Na₂S₂O₃, mercaptanes, amines, hypophosphites, sugars.

Organosilsesquioxanes are silicon-oxygen based frameworks having usually the general formula (RSiO_{1.5})ₙ, in which n is an even number equal or greater than 4. These compounds therefore have a specific structure, for example a compound having the formula (RSiO_{1.5})₈ has an octahedral cage structure.

Organosilsesquioxanes (SSQ's) can be prepared in a well-defined manner with tailor able functionality as is described in [EP 1957563 B1]. They can be built starting with only one type of alkoxysilane precursor leading to cage-type species with eight functionalities of the same kind of functional group or they can be designed as dual or triple functional species when starting the synthesis with two or three different types of precursors. The cages created can therefore possess only one functional group of one kind or multiple functional groups of one kind per cage when the stoichiometry between e.g. reactive group containing functional organo-alkoxysilane and alkyl functional organo-alkoxysilane is varied. This feature makes the cage-type SSQ's to a powerful tool for materials design ranging from silane coupling agent properties towards matrix forming properties allowing hybrid coatings or bulk materials to be built.

The organosilsesquioxane comprises at least one functional group affine to the metal of said metal salt. This is a preferably group comprising at least one heteroatom selected from the group comprising N, S, O, Cl, Br, I and/or an aromatic group.

More preferably this functional group is part of a non-hydrolysable group connected to one of the Si-atoms of the organosilsesquioxane.

In a preferred embodiment of the invention the at least one functional group is selected from the group comprising amino groups, hydroxyl groups, epoxy groups, methyl or ethyl ether groups, carbonyl groups, thiol groups, disulfide groups, methyl or ethyl thioether groups, carboxylic acids, amide groups, anhydride groups, aromatic groups, heteroaromatic groups, sulfonyl groups, 1,2 or 1,3 carbonyl groups. If the groups cannot withstand the conditions of the synthesis of the metal colloids precursors of these groups or protected groups may be used (the epoxy groups may serve as precursors for hydroxyl groups or an isocyanate group is a precursor for an amino group).

Such groups may be bound to one Si-atom of the organosilsequioxane by a linear or branched alkylene group with 1 to 20 carbon atoms or cyclic alkylene group with 3 to 20 carbon atoms, wherein more than one hydrogen atom may be substituted with D, F, Cl, Br, I and wherein one or more CH₂-groups not directly connected with each other and to the Si-atom may be substituted with O, S, or one or more CH₂-groups may be substituted with a substituted or unsubstituted aromatic ring system comprising 6 to 12 aromatic ring atoms or a substituted or unsubstituted heteroaromatic ring system comprising 5 to 12 aromatic ring atoms.

Examples for such non-hydrolysable groups are *-CH₂-NH₂, *-(CH₂)₂-NH₂, *-(CH₂)₃-NH₂, *-(CH₂)₄-NH₂, *-(CH₂)₅-NH₂, *-(CH₂)₆-NH₂, *-(CH₂)₇-NH₂, *-(CH₂)₈-NH₂, *-CH₂-SH, *-(CH₂)₂-SH, *-(CH₂)₃-SH, *-(CH₂)₄-SH, *-(CH₂)₅-SH, *-(CH₂)₆-SH, *-(CH₂)₇-SH, *-(CH₂)₈-SH, *-C₆H₆-SH, *-CH₂-NCO, *-(CH₂)₂-NCO, *-(CH₂)₃-NCO, *-(CH₂)₄-NCO, *-(CH₂)₅-NCO, *-(CH₂)₆-NCO, *-(CH₂)₇-NCO, *-(CH₂)₈-NCO wherein * is the bond to the Si-atom of the organosilsesquioxane.

As mentioned above the organosilsesquioxane may comprise more than one type of group. It is also possible that the organosilsesquioxane comprises further inert groups, which for example increase the hydrophobicity of the organosilsesquioxane. These groups may be linear or branched alkyl chains with 1 to 20 carbon atoms or cyclic alkyl chains with 3 to 20 carbon atoms, wherein more than one hydrogen atom may be substituted with D, F, Cl, Br, I and wherein one or more CH₂-groups not directly connected with each other and to the Si-atom may be substituted with O, S, or one or more CH₂-groups may be substituted with a substituted or unsubstituted aromatic ring system comprising 6 to 12 aromatic ring atoms or a substituted or unsubstituted heteroaromatic ring system comprising 5 to 12 aromatic ring atoms.

Examples for such inert groups are linear or branched alkyl chains with 1 to 12 carbon atoms or cyclic alkyl chains with 3 to 12 carbon atoms, such as methyl, ethyl, n-propyl, isopropyl, n-butyl, iso-butyl, n-hexyl, i-hexyl, octyl, cyclohexyl, or aryl groups with 6 to 12 aromatic ring atoms such as phenyl or naphthyl.

In another embodiment of the invention the organosilsesquioxane may comprise further groups by way of which crosslinking is possible. This means that these groups are capable to be part of a condensation, polycondensation or polymerisation reaction. This opens up the possibility to chemically bond the surface modified metal colloids to a surrounding matrix, e.g. a polymer matrix or to crosslink the metal colloids. These functional groups may specifically react with specific groups present in the matrix, e.g. the hydroxyl groups of a modified polymer may react with epoxid groups present on the organosilsesquioxane. The functional groups may also take part in a polycondensation or polymerisation reaction of the surrounding matrix. This is the case if the modified metal colloids are mixed with corresponding monomers before the curing of the composition.

Specific examples of functional groups by way of which crosslinking is possible are, for example, the epoxide, oxetane, hydroxyl, ether, amino, monoalkylamino, dialkylamino, optionally substituted anilino, amide, carboxyl, carboxyl anhydride, vinyl, allyl, alkynyl, acryloyl, acryloyloxy, methacryloyl, methacryloyloxy, mercapto, cyano, alkoxy, isocyanato, protected or blocked isocyanato, aldehyde, alkylcarbonyl, acid anhydride and phosphoric acid groups. These functional groups are attached to the silicon atom by way of alkylene, alkenylene or arylene bridge groups, which may be interrupted by oxygen or-NH- groups. Examples of non-hydrolysable groups containing vinyl or alkynyl group are C₂₋₆ alkenyl, such as vinyl, 1-propenyl, 2-propenyl and butenyl, and C₂₋₆ alkynyl, such as acetylenyl and propargyl, for example. The said bridge groups and any substituents present, as in the case of the alkylamino groups, are derived, for example, from the above-mentioned alkyl, alkenyl or aryl radicals. Of course, the non-hydrolysable group may also contain more than one functional group.

Specific examples of non-hydrolysable groups containing functional groups by way of which crosslinking is possible are a glycidyl- or a glycidyloxy-(C₁₋₂₀)-alkylene group, such as β-glycidyloxyethyl, γ-glycidyloxypropyl, δ-glycidyloxybutyl, ε-glycidyloxypentyl, ω-glycidyloxyhexyl, and 2-(3,4-epoxycyclohexyl) ethyl, a (meth)acryloyloxy-(C₁₋₆)-alkylene group, where (C₁₋₆)-alkylene is, for example, methylene, ethylene, propylene or butylene, a isocyanato-(C₁₋₆)alkylene group for example 3-isocyanatopropyl group, a vinyl terminated C₁₋₆-alkylene group.

In some embodiments the groups affine to the metal of said metal salt are also groups capable of crosslinking.

The organosilsesquioxane comprises at least one group affine to the metal of said metal salt and at least one further group, which may be an inert group.

In another embodiment of the invention the organosilsesquioxane comprises at least one group affine to the metal of said metal salt and at least one group by way of which crosslinking is possible. In a preferred embodiment this group is different to the group affine to the metal of said metal salt.
The organosilsesquioxane comprises at least two different non-hydrolysable groups bound to different Si-atoms of the silsesquioxanes.

In a preferred embodiment of the invention the organosilsesquioxane comprises at least three different non-hydrolysable groups bound to different Si-atoms of the silsesquioxanes.

In another embodiment of the invention the organosilsesquioxane comprises at least one group affine to the metal of said metal salt, at least one group by way of which crosslinking is possible and at least one further group, which may be an inert group.

Preferred organosilsesquioxanes of the invention comprise as functional groups mercapto and alkyl groups, mercapto and vinyl groups, mercapto and blocked isocyanato groups, mercapto and amino groups, epoxy and alkyl groups, mercapto and alkyl and vinyl groups, mercapto and alkyl and amino groups, mercapto and alkyl and blocked isocyanato groups.

The blocking of the isocyanates is a method, known to those skilled in the art, for reversibly lowering the reactivity of isocyanates. To block the isocyanates, all common blocking agents are useful, for example acetone oxime, cyclohexanone oxime, methyl ethyl ketoxime, acetophenone oxime, benzophenone oxime, 3,5-dimethylpyrazole, 1,2,4-triazole, ethyl malonate, ethyl acetoacetate, ε-caprolactam, phenol, ethanol, preference being given in accordance with the invention to 1,2,4-triazole.

Depending on starting materials used for the production of the organosilsesquioxanes different structures may be formed. Preferred organosilsesquioxane for the invention are closed type cage-shaped-like organosilsesquioxanes

(R¹-SiO_{1.5})ₙ (I)

or partially open type cage-shaped-like organosilsesquioxanes

(R¹-SiO_{1.5})ₙ(O_{0.5}R²)₁₊ₘ, (II)

wherein n represents an integer from 6 to 18; m represents 0 to 3.

For closed type cage-shaped-like structure represented by formula (I) n is an even number from 6 to 18, preferably from 6 to 14, more preferably 8, 10 or 12.

At least one R¹ is a group affine to the metal of said metal salt as described before. The other R¹ if present are groups by way of which crosslinking is possible or inert groups. R² is H or and C₁₋₆ linear or branched alkylene group.

There may a mixture of organosilsesquioxanes present in the reaction mixture, e.g. a mixture of n 8, 10 and 12.

In a preferred embodiment of the invention the organosilsesquioxane of the invention has an average molecular weight (determined with GPC-SEC; gel permeation chromatography-size exclusion chromatography) of lower than 7000 g/mol, lower than 5000 g/mol, preferably lower than 3000 g/mol, lower than 2000 g/mol.

In the present case it is intended that the SSQ molecules have at least one functional group of one kind that can bind to the metal right after the reducing reaction has started. The combination of possibility of tailored internal stoichiometric balance between the precursors used to build the individual SSQ cages with the possibility of stoichiometric balance between metal and functional SSQ molecule, the pre-reaction mentioned above enables to build the metal colloids with very defined functionality. The metal colloids can be designed to have only one, exactly two or three or even multiple SSQ functionalization molecules per metal colloid hybrid entity. Additionally mercapto groups and amine groups, so called H-acide groups, are candidates that show complexing ability and reducing ability at the same time. Furthermore it is possible to combine such H-acide groups also with polycondensable groups such as e.g. blocked isocyanates or polymerisable groups such as e.g. vinyl or acrylate groups which enable to build up or to link to binder matrices.

The composition further comprises at least one metal salt. In a preferred embodiment the metal salt comprise at least one metal ion selected from the metals of groups 8 to 16, even more preferred from at least one metal selected from the group comprising Cu, Ag, Au, Ni, Pd, Pt, Co, Rh, Ir, Ru, Os, Se, Te, Cd, Bi, In, Ga, As, Ti, V, W, Mo, Sn and Zn, even more preferred Cu, Ag, Au, Ni, Pd, Pt, Co, Rh, Ir, Ru, Os, Se, Te, Sn and Zn.

The salts may be selected from the group comprising nitrates, sulfates, carbonates, halides (fluorides, chlorides, bromides, iodides), salts from organic acids such as acetates, tartrates, oxalates, metallic acids such as H(AuCl₄).

Examples for suitable salts are CuCl, CuCl₂, CuSO₄, Cu(NO₃)₂, AgNO₃, H(AuCl₄), PdCl₂, ZnCl₂, ZnSO₄, SnCl₂, SnCl₄, Cu(CH₃COO)₂, CuCO₃, Cu(ClO₄)₂, wherein also hydrates of the salts may be used.
In a preferred embodiment the metal salt comprises Cu ions. The metal salt is even more preferably CuCl, CuCl₂, CuSO₄, Cu(NO₃)₂, Cu(CH₃COO)₂, CuCO₃ and/or Cu(ClO₄)₂.

In a preferred embodiment the ratio of metal ions to organosilsesquioxane is between 500:1 to 1:50. In a preferred embodiment the ratio is between 500:1 to 1:2. In another preferred embodiment the ratio is at least 1:1 and up to 500:1. By using an excess of metal ions the number of organosilsesquioxanes per metal colloid can be controlled.

The composition further comprises at least one reducing agent. The reducing agent needs to be capable to reduce the metal of the metal salt to the metal. The reducing agent is selected from the group comprising hydrazine or hydrazine derivatives, borohydrides such as sodium borohydride, ascorbic acid, malic acid, oxalic acid, formic acid, citric acid, salts thereof, Na₂SO₃, Na₂S₂O₃, mercaptanes, amines, hypophosphites such as sodium hypophosphite (NaH₂PO₂), sugars. In a preferred embodiment the reducing agent is selected from the group comprising ascorbic acid, hydrazine, sodium borhydride and sodium hypophosphite.

The molar ratio between the metal ions and the reducing agent can be between 50:1 and 1:50.

The composition also comprises at least one solvent. The at least one solvent is a solvent which is capable to dissolve all components of the composition. Depending on the nature of the component a polar or non-polar solvent or a mixture thereof may be used. Examples for polar solvents are water, alcohols such as methanol, ethanol, propanol, n-butanol, ethylene glycol, propylene glycol or diethylene glycol, ether such as diethylether or tetrahydrofuran, DMF. Examples for non-polar solvents are alkanes such as pentane, hexane or cyclohexane, aromatic solvents such as benzene, 1,2-dichlorobenzene or toluene, chloroform. A mixture of at least two solvents may be used.

In a preferred embodiment of the invention in a first step a solution or dispersion of the metal salt in at least one solvent is prepared. For this step usually a polar solvent, like ethylene glycol, water, ether, alcohols or mixtures thereof are used.

In an embodiment of the invention the concentration of the metal salt is between 0.005 mol/l and 2 mol/l.

To this the organosilsesquioxane is added. Preferably the organosilsesquioxane is added as a solution in a solvent. This solvent can be the same or a different solvent as used for the metal salt. If necessary the organosilsesquioxane may be added to a heated solution in order to keep all components in solution in the resulting mixture.

In an embodiment of the invention the concentration of the solution of the organosilsesquioxane is between 0.0001 mol/l and 2 mol/l.

To this mixture the reducing agent is added in a last step. This addition is preferably done over a period of time between 1 minute and 2 hours. During this time the mixture is usually stirred.

In a preferred embodiment the reducing agent is added as a solution, preferably with a concentration between 0.05 mol/l and 2 mol/l.

During the addition of the reducing agent or after the addition of the reducing agent a thermal and/or photochemical treatment is performed to induce the reducing of the metal of the metal salt.

Such a treatment may comprise stirring of the mixture at ambient temperature. It may also comprise heating or cooling of the mixture below 0 °C. A heating may comprise heating the mixture to 30 °C to 120 °C.

The mixture may be treated further at this temperature for a certain period of time, preferably between 5 minutes and 48 hours. Preferably the whole reaction to form the metal colloids takes between 2 hours and 48 hours.

Depending on the metal and the reducing agent the mixture may be stirred at room temperature or cooled down or heated.

The temperature may be varied during the reaction.

In a preferred embodiment the solution does not contain any further ingredients like dispersants, stabilizers or capping agents.

In another embodiment of the invention the solution may contain further additives like dispersants, capping agents or stabilizers. This can be beneficial to prevent the agglomeration of the particles.

It may be necessary to quench the reaction after a certain period of time. After the quenching it may be necessary to further stir the reaction for a period of time and one or a sequence of different temperatures in the range as previously described.

In a preferred embodiment the process is a single phase process, so there is no emulsion or another liquid phase present during the reaction. Also preferred is that the process does not comprise any further steps such as addition of another reducing agent.

As a result metal colloids are formed which are modified with at least one organosilsesquioxane.

The method may comprise further steps for cleaning the reaction mixture and if necessary isolate the modified metal colloids.

In a preferred embodiment these steps comprise centrifuging, decanting, cross flow filtration or filtration. The resulting powder may be also dried in vacuum.

The metal colloids have preferably an average particle size (measured with TEM) of lower than 40 nm, lower than 30 nm, lower than 20 nm, preferably between 1 nm and 40 nm, between 2 and 30 nm, especially preferred between 4 and 20 nm.

Another aspect of the present invention is a method for the production of a surface modified metal colloid comprising the steps of disperging at least one metal colloid in at least one solvent. Adding at least one organosilsesquioxane as described for the previous method.

The at least one solvent can be a polar or non-polar solvent or a mixture thereof may be used. Examples for polar solvents are water, alcohols such as methanol, ethanol, propanol, n-butanol, ethylene glycol, propylene glycol or diethylene glycol, ether such as diethylether or tetrahydrofuran, DMF. Examples for non-polar solvents are alkanes such as pentane, hexane or cyclohexane, aromatic solvents such as benzene, 1,2-dichlorobenzene or toluene, chloroform,. A mixture of at least two solvents may be used. Preferred are polar solvents such as water, alcohols or THF.

It may be necessary to further stir the mixture for a certain period of time, for example between 1 hour and 48 hours, preferable between 3 and 18 hours. The surface modification may be carried out at a temperature between 0 and 140 °C, preferably at a temperature between 20 and 130 °C depending on the solvent and the reaction conditions (reflux, sealed vessel, open vessel) .

The resulting modified metal colloid may be used as is or isolated or cleaned up further, for example by centrifuging, filtration or cross flow filtration.

The molar ratio of Cu:silsesquioxane can be between 300:1 and 1:20, preferably between 5:1 to 10:1, more preferably between 2:1 and 10:1. It seems that a larger amount of silsesquioxane is needed, since the functional group has to bind to the surface of the metal colloid.

In a preferred embodiment the metal colloid used for modification is surface modified with compounds with a molecular weight lower than 1000 g/mol, lower than 800 g/mol, lower than 500 g/mol. With such a surface modification the organosilsesquioxane can easily bind to the surface of the metal colloid. An example for such a compound is dehydroascorbic acid. Preferably there are no stabilizing polymers such as PVP.

In a preferred embodiment of the invention the surface modified metal colloid has a carbon content between 3 and 30 wt.-%.

In a preferred embodiment of the invention the surface modified metal colloid has a sulfur content between 0.1 and 20 wt.-% or between 0.1 and 9 wt.-% if a sulfur containing organosilsesquioxane was used.

In a preferred embodiment of the invention the surface modified metal colloid has a nitrogen content between 0.1 and 5 wt.-% if a nitrogen containing organosilsesquioxane was used.

The surface modified metal colloid obtained with the methods of the present invention can be used in various applications. Since the organosilsesquioxanes used can be obtained with many different functional groups the organosilsesquioxanes can adapt the metal colloid to any environment.

The at least one metal affine group of the organosilsesquioxane forms a chemical bond to the surface of the metal colloid, preferably a covalent or a dative bond.

The metal colloids can be used in coatings, paints, powder coatings, master batches, inks, textiles, polymers, electronic applications, conductive coatings, medical devices or implants. Especial if metal colloids of anti-microbial metals like copper and silver are used, the metal colloids of the present invention can add anti-microbial properties in the mentioned applications.

The metal colloids can be mixed with polymers such as polyethylen, polypropylene, polyacrylate, such as polymethyl methacrylate and polymethyl acrylate, polyvinylbutyral, polycarbonate, polyurethanes, ABS copolymers, polyvinyl chloride, polyethers, epoxide resins, or monomers or precursors for such polymers, such as epoxides, isocyanates, methacrylates, acrylates. The metal colloids can be added before or after the polymerization of such polymers, preferably they are added before the polymerization.

Such a composition may comprise further additives which in the art are normally added according to intended purpose and desired properties. Specific examples are crosslinking agents, solvents, organic and inorganic color pigments, dyes, UV absorbers, lubricants, leveling agents, wetting agents, adhesion promoters and initiators. The initiator may serve for thermally or photochemically induced crosslinking.

The composition may be a liquid, paste or powder, which may be processed further to granules or powder coatings, e.g. based on polyurethanes.

The composition can be applied as coating composition to a surface in any customary manner. Any common coating methods may be used. Examples are centrifugal coating, (electro-)dip coating, knife coating, spraying, squirting, spinning, drawing, spincoating, pouring, rolling, brushing, flow coating, film casting, blade casting, slotcoating, meniscus coating, curtain coating, roller application or customary printing methods, such as screen printing or flexographic printing. The amount of coating composition applied is chosen so as to give the desired coat thickness.

Application of the coating composition to a surface is followed where appropriate by drying, for example at ambient temperature (below 40° C.).

The optionally predried coating is subjected to treatment with heat and/or radiation.

The composition may also be used to produce moulded bodies.

In a preferred embodiment of the invention the modified metal colloids are present in such a composition with at least 0.15 wt.%, at least 0,3 wt.%, at least 0,4 wt.%, at least 0,5 wt.%, and independent from this present with at most 5 wt.%, at most 3 wt.%. Escpecially the modified copper colloids can give coatings or moulded bodies biocidic properties.

The metal colloids may also comprise with functional groups, which can crosslink with the monomers or polymers of the composition.

It is therefore object of the present invention to provide a moulded body or coating comprising at least one modified metal colloid according to the invention, preferably a moulded body or coating comprising at least one of the polymers selected from the group comprising polyethylen, polypropylene, polyacrylate, such as polymethyl methacrylate and polymethyl acrylate, polyvinylbutyral, polycarbonate, polyurethanes, ABS copolymers, polyvinyl chloride, polyethers, epoxide resins.

It is also object of the present invention to provide a substrate coated with such a coating. The substrate may be made of plastics, metal, glass or ceramics.

Another aspect of the present invention is the use of the described organosilsesquioxanes for the surface modification of metal colloids.

The organosilsesquioxanes of the invention are preferably produced according to EP1957563B1.

In a first step a hydrolysable monomer precursor comprising at least 50 mole% of hydrolysable monomer precursors having the formula RSiX₃, in which R is an organic group which is stable to hydrolysis and later forms the organic group bound to Si of the organosilsesquioxane, each X is the same or different to each other X group and is selected from chemically reactive groups such that each Si-X bond is hydrolysable to from a Si-OH bond, is partially hydrolyzed in presence of a mineral acid catalyst. Prior to complete condensation the liquid composition is quenched with an excess of water.

The organosilsesquioxane is then isolated, usually as a separate phase. Any residual solvent may be removed by evaporation.

In a preferred embodiment the hydrolysable monomer precursor is partially hydrolysed in a solution. The solvent is a polar solvent, which is not water, preferably an alcohol, more preferably an alcohol having a boiling point lower than 100 °C.

The amount of water of the partial hydrolysis is to achieve a hydrolysis of one or at most two of the hydrolysable bonds present in the hydrolysable monomer precursor. In a preferred embodiment the amount of water is the amount of water for the hydrolysis of one hydrolysable bond.

In a preferred embodiment the X groups can be the same or different and are selected from the group comprising hydrogen, hydroxyl or halogen (F, Cl, Br or I), alkoxy (preferably C₁₋₆-alkoxy, for example methoxy, ethoxy, n-propoxy, i-propoxy and butoxy), aryloxy (preferably C₆₋₁₀-aryloxy, for example phenoxy), acyloxy (preferably C₁₋₆-acyloxy, for example acetoxy or propionyloxy), alkylcarbonyl (preferably C₂₋₇-alkylcarbonyl, for example acetyl), amino, monoalkylamino or dialkylamino having preferably from 1 to 12, in particular from 1 to 6, carbon atoms. Preferred hydrolyzable groups are halogen, alkoxy groups and acyloxy groups. Particularly preferred hydrolyzable groups are C₁₋₄-alkoxy groups, in particular methoxy and ethoxy.

In a preferred embodiment 70 mole%, 80 mole% or 100 mole% of the hydrolysable monomer precursors have the formula RSiX₃.

If necessary the functional groups of the hydrolysable precursors, which are later bound to the Si-atoms of the organosilsesquioxane, may be protected before the synthesis of the silsesquioxane, e.g. isocyanates may be blocked.

Examples for silanes useful as hydrolysable monomer precursors are γ-glycidyloxyalkyltrialkoxysilanes, epoxyalkyltri(m)ethoxysilanes or 2-(3,4-epoxycyclohexyl)alkyltri(m)ethoxy-silanes((m)ethoxy=methoxy or ethoxy), where the alkyl group may have from 2 to 6 carbon atoms, γ-glycidyloxypropyltrimethoxysilane (GPTS), γ-glycidyloxypropyl-triethoxysilane (GPTES), 3,4-epoxybutyltrimethoxysilane, 2-(3,4-epoxycyclohexyl)ethyltrimethoxysilane, hydroxymethyltriethoxysilane, bis(hydroxyethyl)-3-aminopropyltriethoxysilane and N-hydroxyethyl-N-methylaminopropyltriethoxysilane, 3-aminopropyltriethoxysilane, 3-aminopropyltrimethoxysilane, N-2-aminoethyl-3-aminopropyltrimethoxysilane, trimethoxysilylpropyldiethylenetriamine, N-(6-aminohexyl)-3-aminopropyltrimethoxysilane, 4-aminobutyltriethoxysilane, (aminoethylaminomethyl)-phenylethyltrimethoxysilane and aminophenyltrimethoxysilane, 3-mercaptopropyltrimethoxysilane, 3-mercaptopropyltriethoxysilane, 3-mercaptopropylmethyldimethoxysilane, 2-mercaptoethyltriethoxysilane, 1,2-dimercaptoethyltrimethoxysilane and p-mercaptophenyltrimethoxysilane, 3-isocyanatopropyltri(m)ethoxysilane and 3-isocyanatopropyldimethylchlorosilane.

In a preferred embodiment of the invention one kind of hydrolysable monomer precursor is used.

In a preferred embodiment of the invention at least two different hydrolysable monomer precursors are used, which prefably comprise different in their non-hydrolysable groups.

Other objects and advantages of the present invention may be ascertained from a reading of the specification and appended claims in conjunction with the drawings therein.

For a more complete understanding of the present invention, reference is established to the following description made in connection with accompanying drawings in which:
- Fig. 1: XRD (X-ray diffraction) spectrum on CuV146 (Cu Kα);
- Fig. 2: XRD spectrum on CuV094a;
- Fig. 3: XRD spectrum on CuV140;
- Fig. 4: XRD spectrum on CuV140SH_1;
- Fig. 5: XRD spectrum on CuV140SH_2;
- Fig. 6: IR spectrum on Cu/SSQ-SH 1:1 (molar ratio) with NaBH₄ as reducing agent [CuV077] in comparison with the free ligand;
- Fig. 7: IR spectrum on Cu/SSQ-SH 4:1 with NaBH₄ as reducing agent [CuV078] in comparison with the free ligand;
- Fig. 8: IR spectrum on Cu/SSQ-SH 4:1 with NaH₂PO₂ as reducing agent [CuV091];
- Fig. 9: IR spectrum on Cu/SSQ-SH 185:1 with ascorbic acid as reducing agent [CuV146];
- Fig. 10: IR spectrum on Cu/SSQ-SH-NH₂ 33:1 with ascorbic acid as reducing agent [CuV103];
- Fig. 11: IR spectrum on Cu/SSQ-SH-NH₂ with ascorbic acid as reducing agent [CuV107];
- Fig. 12: IR spectrum on Cu/SSQ-SH-NH₂ with NaBH₄ as reducing agent [CuV109];
- Fig. 13: IR spectra on Cu/SSQ-SH in different ratios (1/0, 5/1, 3/1, 2/1) with ascorbic acid as reducing agent [CuV140, CuV140-SH_1, CuV140-SH_2, CuV140-SH_3].
- Fig. 14: TEM micrographs from dried particle dispersion [CuV077];
- Fig. 15: TEM micrographs from dried particle dispersion [CuV078];
- Fig. 16: TEM micrographs from dried particle dispersion [CuV091];
- Fig. 17: TEM micrographs from dried particle dispersion [CuV146];
- Fig. 18: TEM micrographs from dried particle dispersion Cu:SSQ-SH 16.7:1 [CuV094a];
- Fig. 19: TEM micrographs from dried particle dispersion Cu:SSQ-SH 33.5:1 [CuV094b];
- Fig. 20: TEM micrographs from dried particle dispersion Cu:SSQ-SH 66.9:1 [CuV094c];
- Fig. 21: TEM micrographs from dried particle dispersion Cu:SSQ-SH 133.8:1 [CuV094d];
- Fig. 22: TEM micrographs from dried particle dispersion Cu/SSQ-SH-NH₂ 33:1 [CuV103];
- Fig. 23: TEM micrographs from dried particle dispersion Cu/SSQ-SH-NH₂ [CuV107];
- Fig. 24: TEM micrographs from dried particle dispersion Cu/SSQ-SH-NH₂ [CuV109].

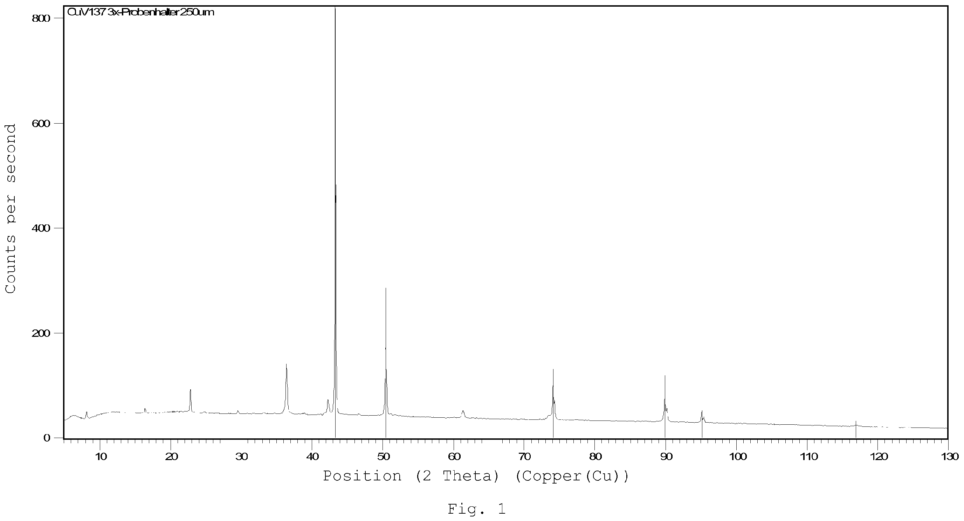

Figure 1 shows a XRD spectrum of a metal colloid modified with a SSQ-SH. The reflections of the crystalline metal phase of copper are clearly visible.

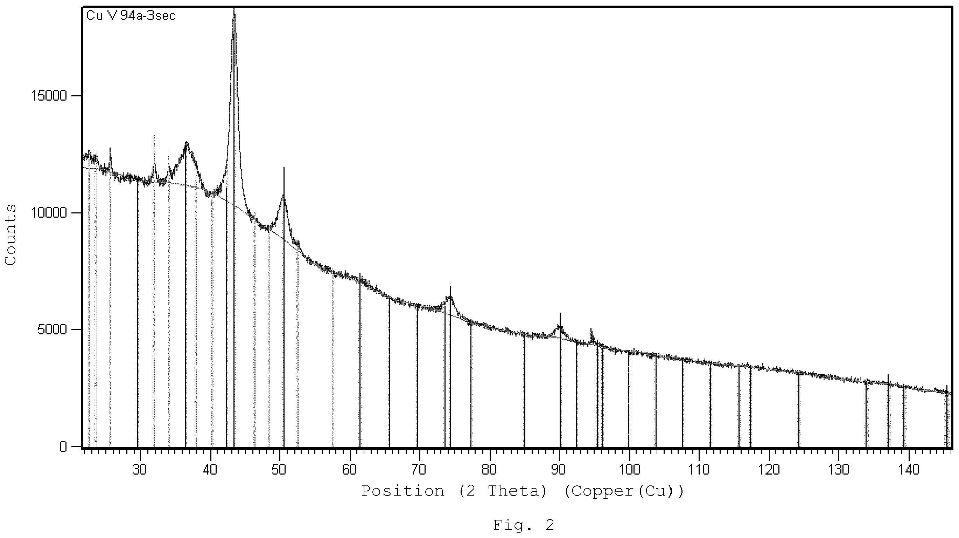

Figure 2 shows a XRD spectrum of a metal colloid modified with a SSQ-SH.

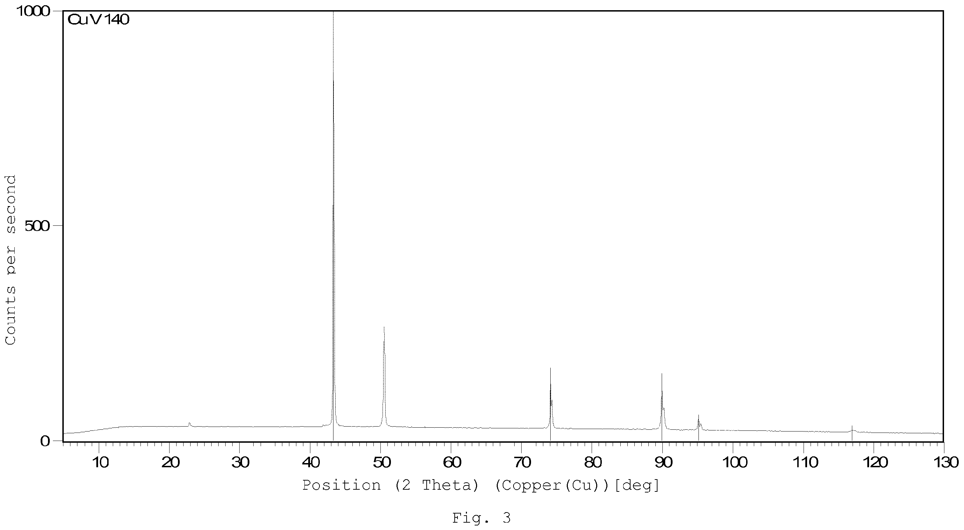

Figure 3 shows a XRD spectrum of a metal colloid obtained by reduction with ascorbic acid.

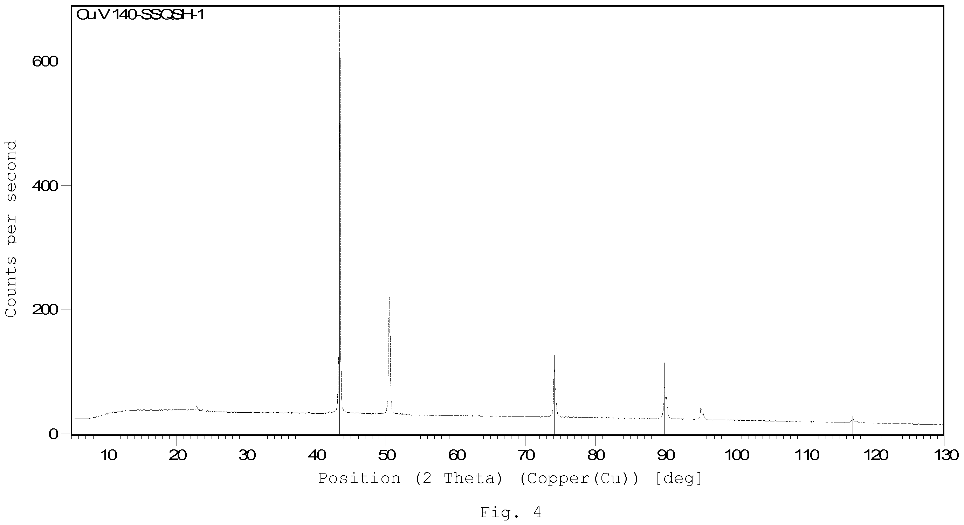

Figure 4 shows a XRD spectrum of the metal colloid obtained by surface modification of the metal colloid of figure 3 with SSQ-SH. The reflections of the crystalline copper phase stay the same.

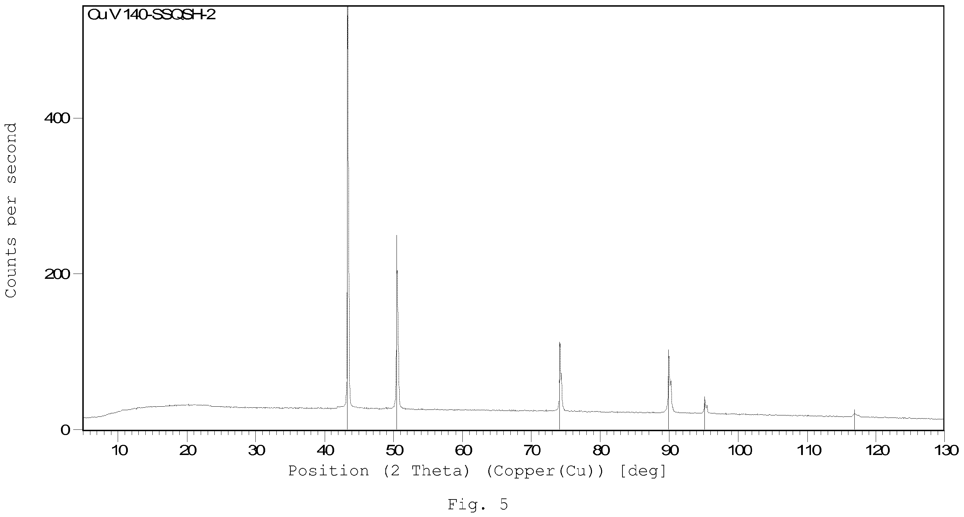

Figure 5 shows a XRD spectrum of the metal colloid obtained by surface modification of the metal colloid of figure 3 with a different amount of SSQ-SH. The reflections of the crystalline copper phase stay the same.

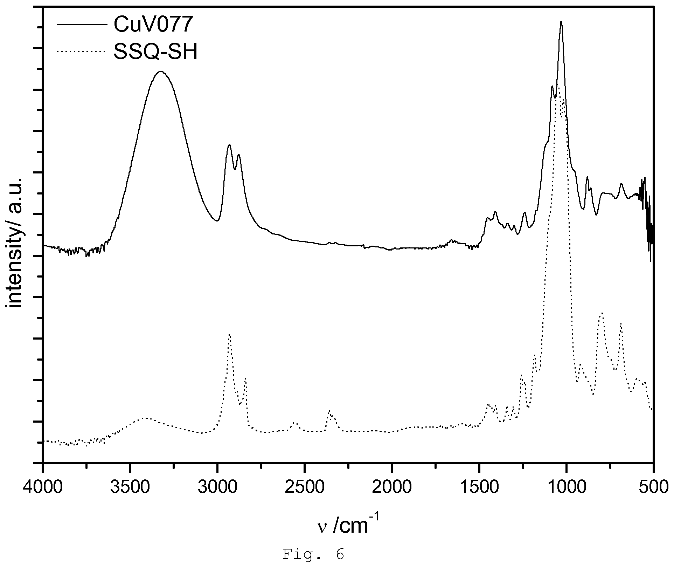

Figure 6 shows the IR spectrum of a metal colloid modified with SSQ-SH and the IR spectrum of the free SSQ-SH. It can be seen that the SSQ-SH is bound to the surface of the metal colloid, especially by the reduction of the SH-band at 2560 cm⁻¹.

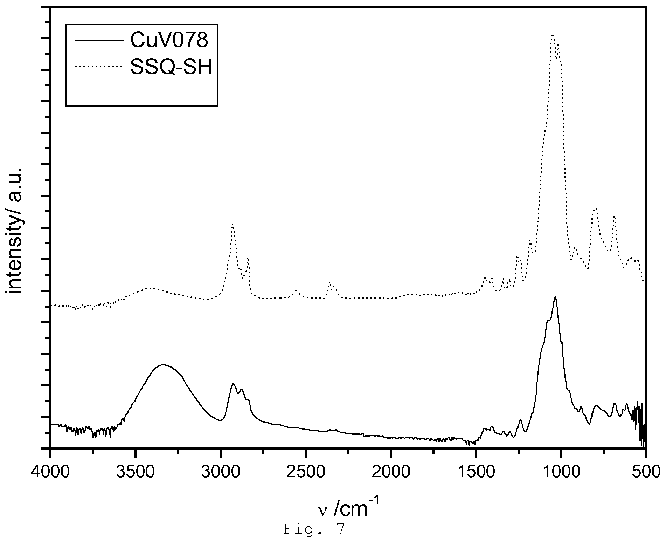

Figure 7 shows the IR spectrum of a metal colloid modified with SSQ-SH obtained with NaBH₄ as reducing agent. The bands of SSQ-SH are still visible in the spectrum of the modified metal colloid.

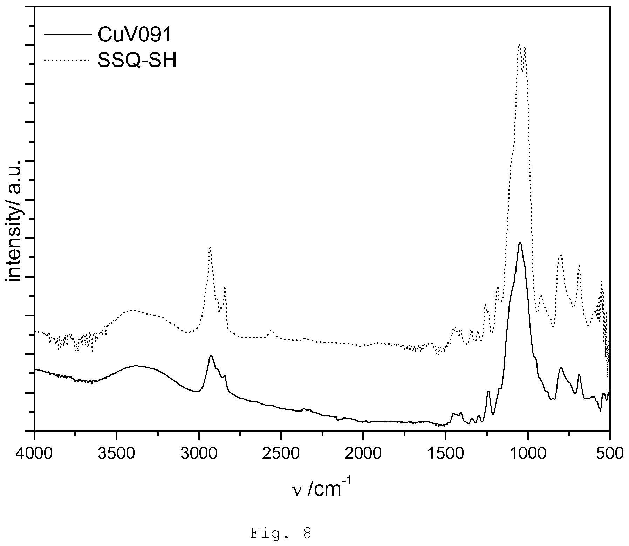

Figure 8 shows the IR spectrum of a metal colloid modified with SSQ-SH obtained with NaH₂PO₂ as reducing agent. The bands of SSQ-SH are still visible in the spectrum of the modified metal colloid.

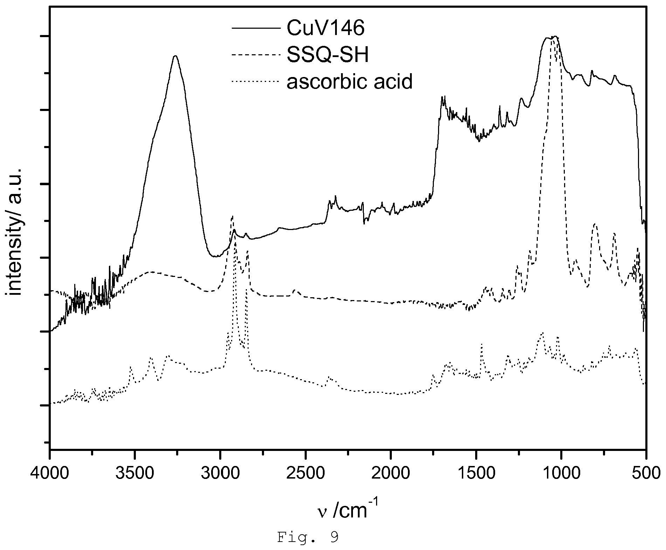

Figure 9 shows the IR spectrum of a metal colloid modified with SSQ-SH obtained with ascorbic acid as reducing agent. In the IR spectrum it can be seen that beside SSQ-SH also ascorbic acid or its reduced form is also bound to the surface of the modified metal colloid.

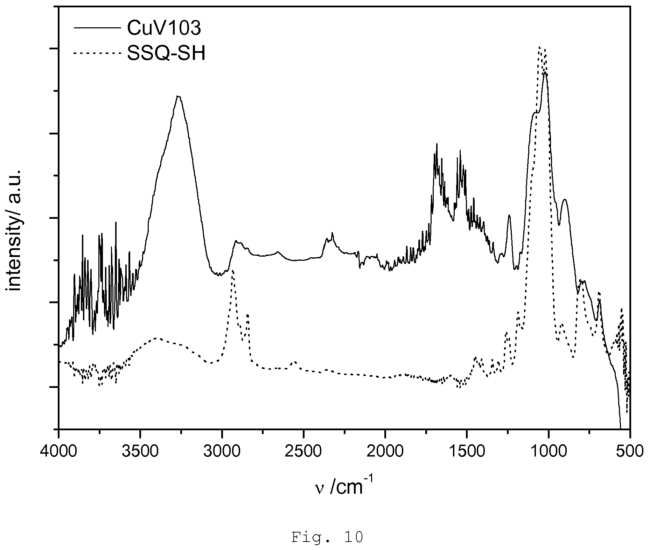

If the ratio of SSQ-SH to metal is changed a similar IR spectrum is obtained as shown in figure 10.

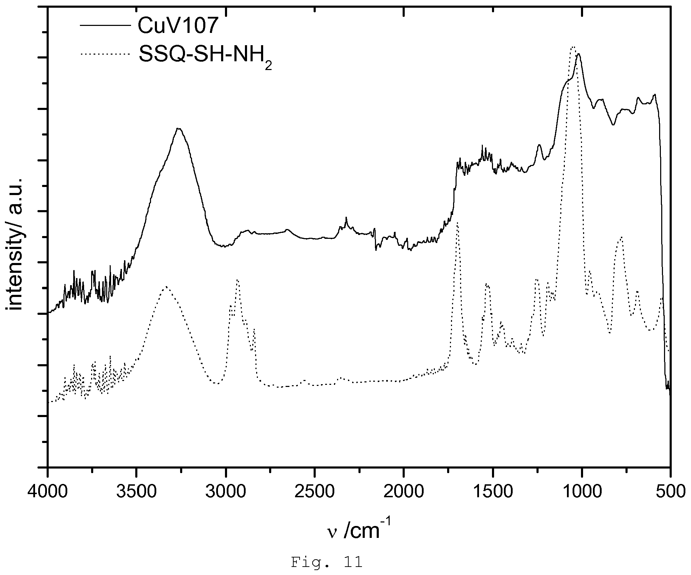

Figure 11 shows the IR spectrum of a metal colloid surface modified with SSQ-SH-NH₂ and ascorbic acid as reducing agent. The bands of SSQ-SH-NH₂ are weak.

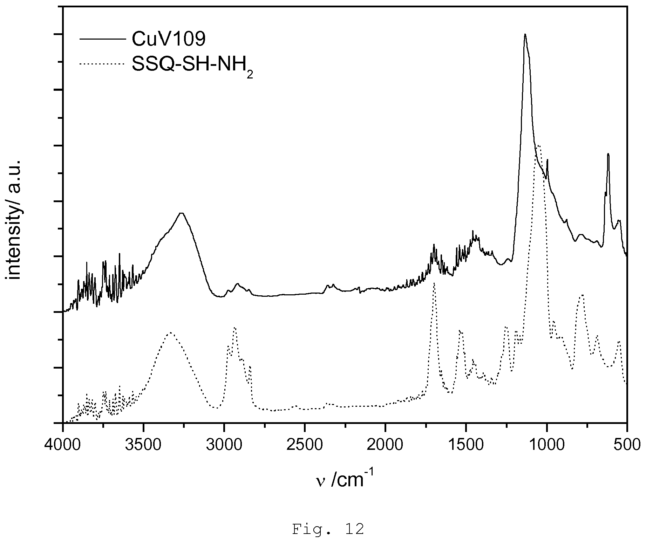

Figure 12 shows the IR spectrum of a metal colloid surface modified with SSQ-SH-NH₂ and NaBH₄ as reducing agent. The bands of SSQ-SH-NH₂ are good visible.

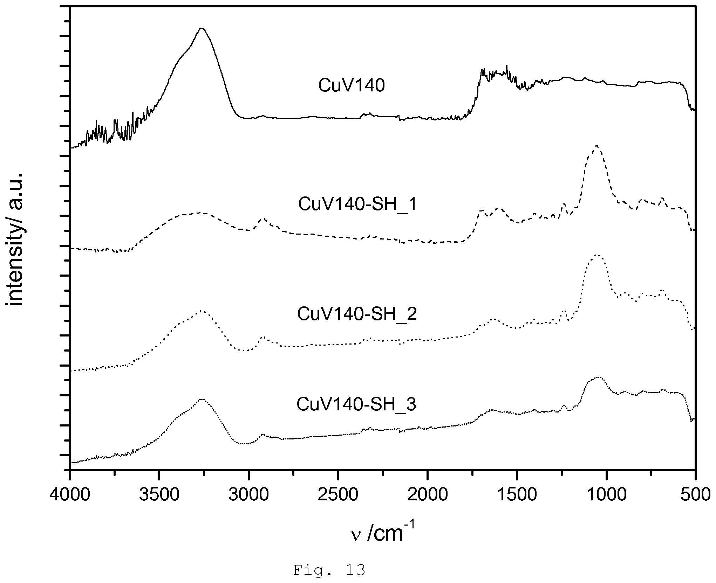

Figure 13 show the IR spectra of a metal colloid not modified with a organosilsesquioxane (CuV140) and its modification using an increasing amount of SSQ-SH. In all cases SSQ-SH is clearly bound to the surface of the metal colloid.

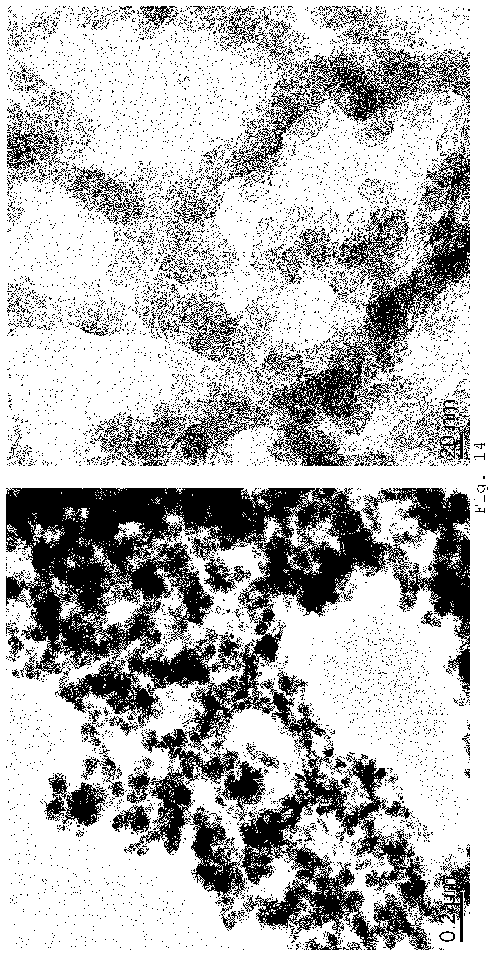

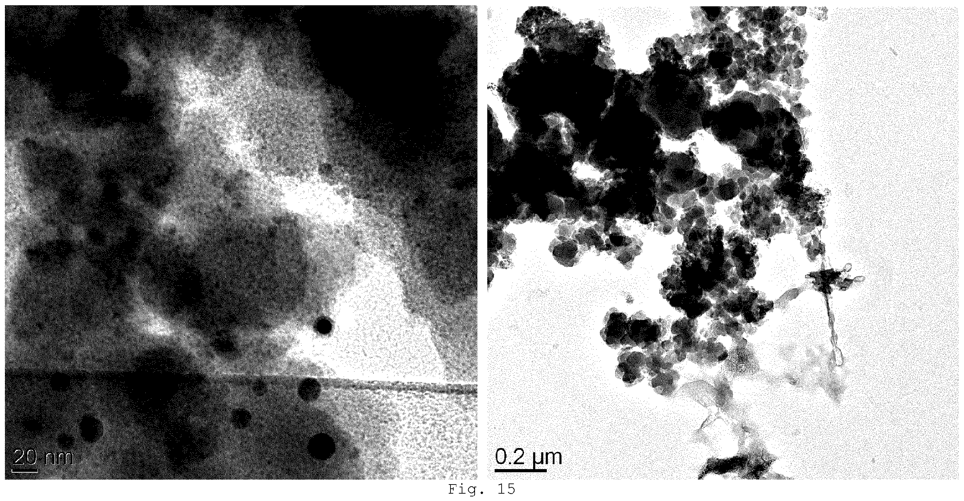

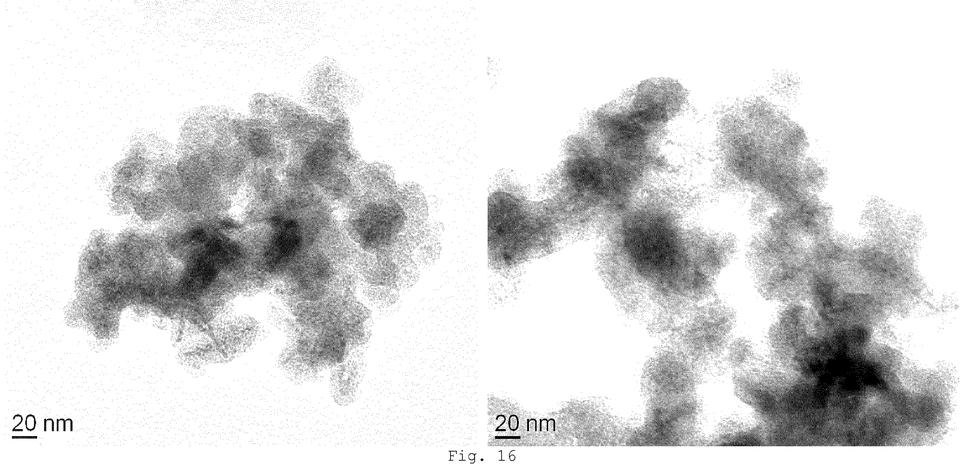

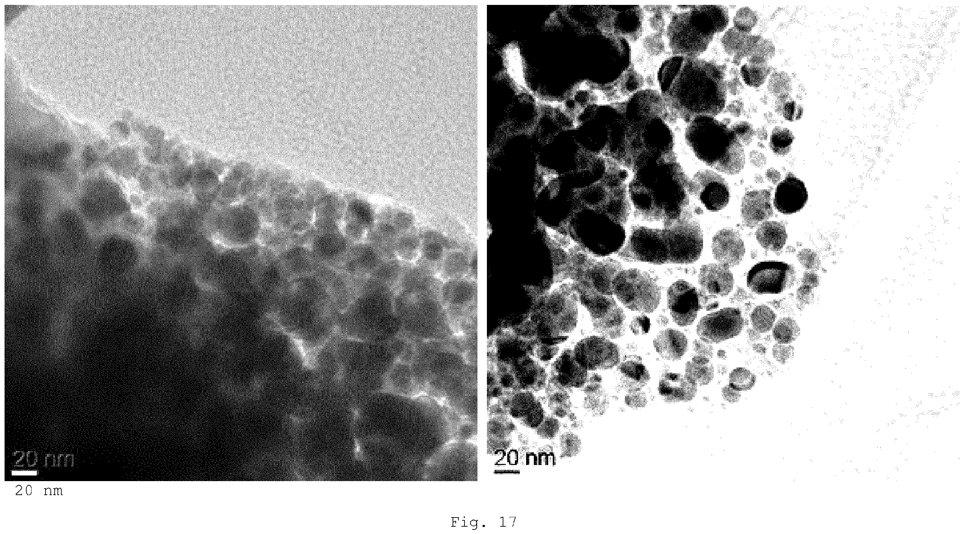

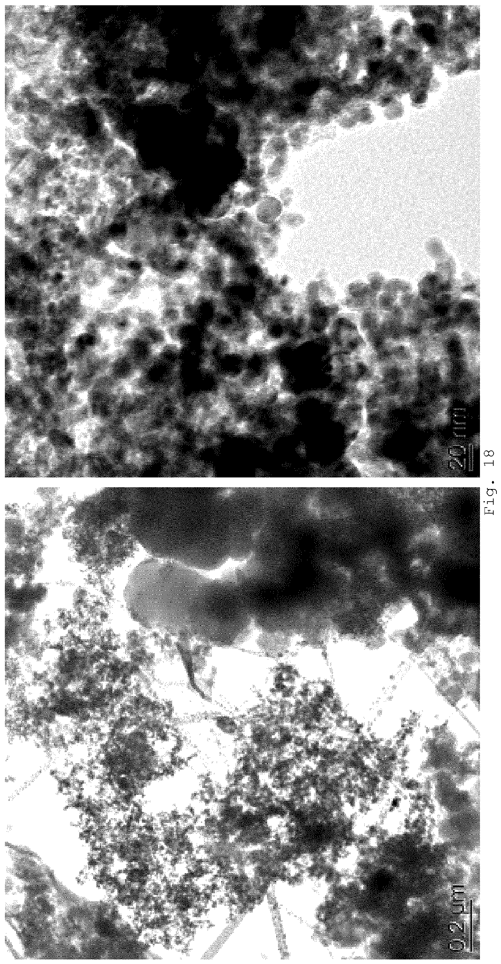

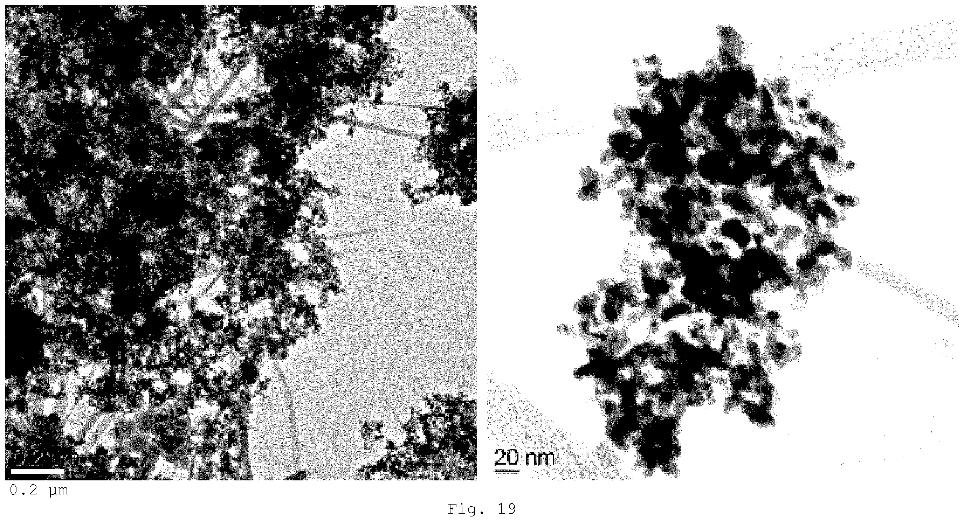

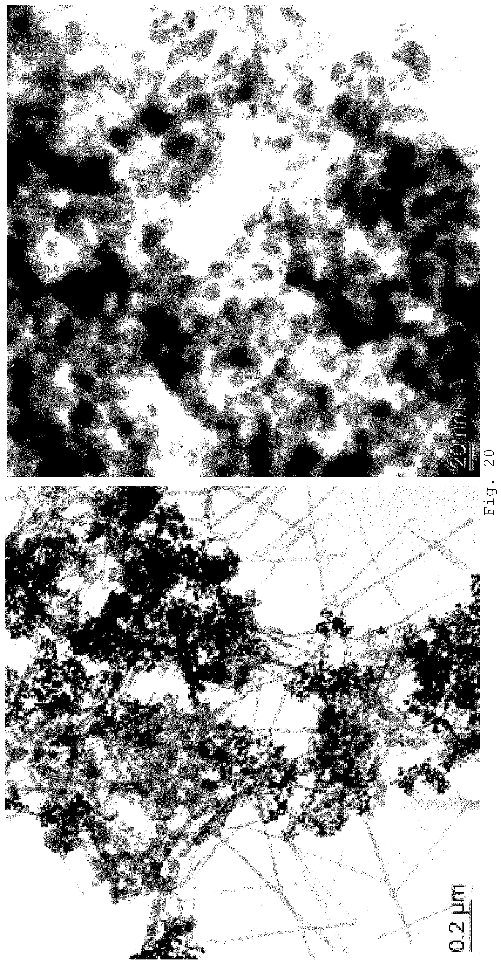

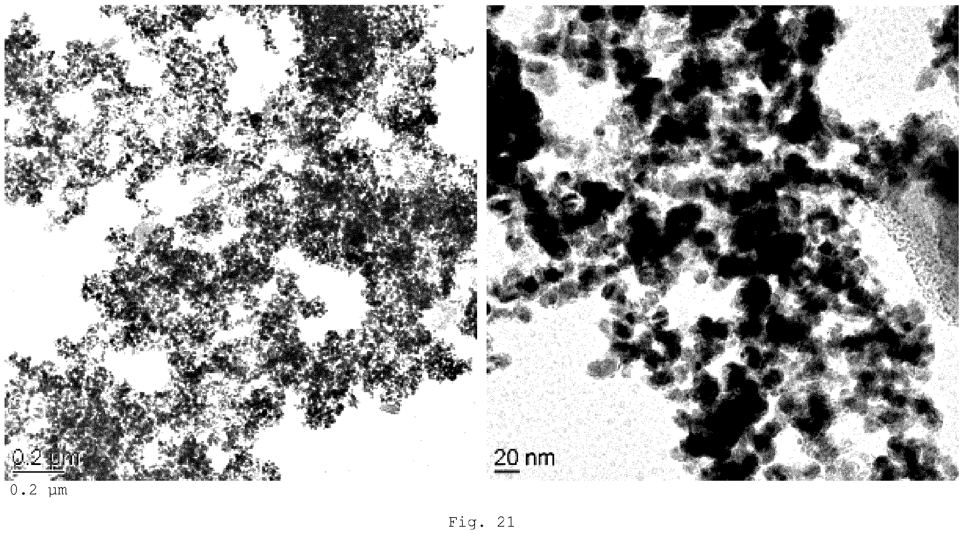

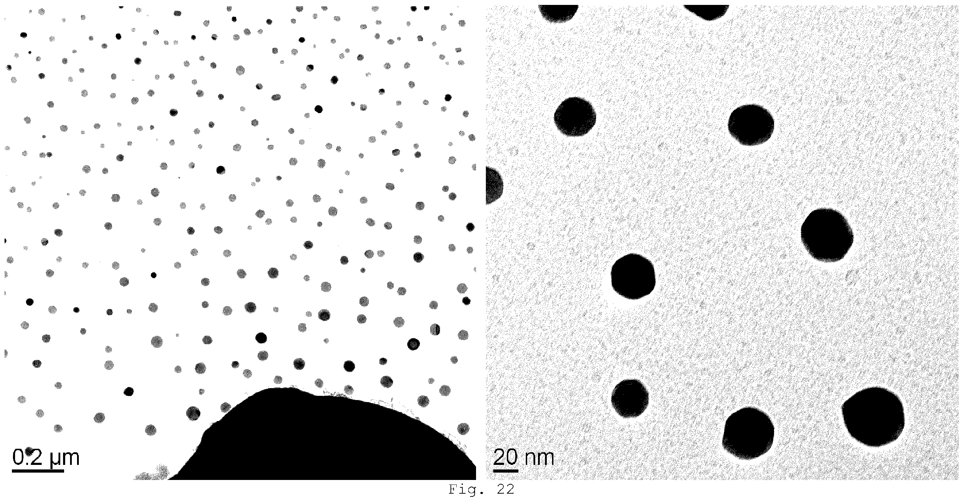

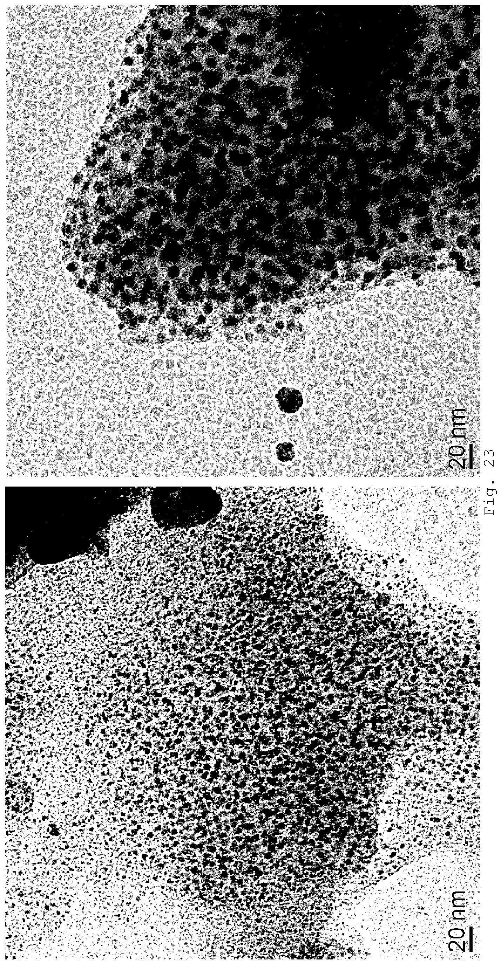

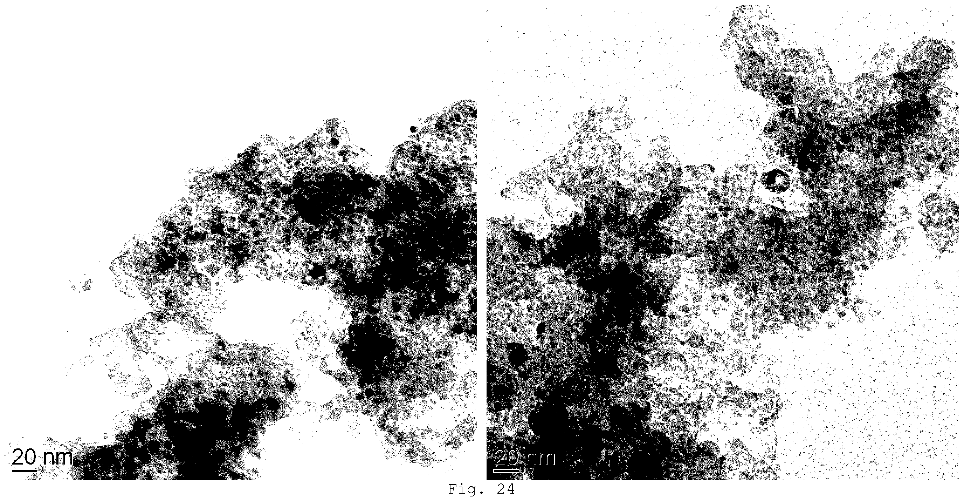

The figures 14 to 24 show TEM micrographs of dried particles dispersions from the different examples.

Table 5 shows Carbon content (denoted: C), sulphur content (denoted: S) and nitrogen content (denoted: N) from elemental analysis from different examples (* means comparative example) .

Especially the content S shows the presence of the organosilsesquioxane on the surface of the metal colloid. These values are in a range proportional to the ratio of metal to organosilsesquioxane used in the experiments. A molar ratio of 16.7 to 1 leads to a sulphur content of 12.19 ± 0.27 wt.-%. A lower ratio of 33.5 : 1 leads to a sulphur content of 8.67 ± 0.02 wt-% . Using an even lower amount of organosilsesquioxane (66.9:1 or 133.8:1) leads to 5.89 ± 0.16 wt.-%, resp. 5.10 ± 0.25wt.-%. It seems that in these cases the same amount of organosilsesquioxane is bound to the metal colloids.

This shows that by the ratio present during the synthesis of the particles the amount of organosilsesquioxane on the surface of the particles can be controlled.

Table 6 shows a similar experiment for the surface modification of a metal colloid with an organosilsesquioxane. The table discloses the Carbon content (denoted: C) and sulphur content (denoted: S) from elemental analysis. For this metal colloid it seems that there is an optimal ratio for the surface modification with an organosilsesquioxane (* means comparative example).

### Examples

The molecular weight of the SSQ was determined with GPC-SEC. Calibrated with PDMS-standards (molecular weight 311, 3510, 10700 g/mol) in 1 ml THF. For the measurement the following conditions were used: mobile phase THF (1mL/min), stationary phase PSS pre column, PSS-SDV 100 angstrom, 8 x 300 mm; 50 µL sample volume, detector RID. All samples were measured undiluted.

The elemental analysis was performed by high tempetature heating using a vario Micro Cube (Elementar Analysensysteme GmbH Germany; 1200 °C). The formed analyte gases N₂, H₂O, CO₂ and SO2 carried by He gas are sequentially separated by a temperature programmable desorption column (TPD) and quantitatively determined on a thermo-conductivity detector (TCD). The dried powders were measured.

### Comparative example 1: Fabrication sequence for mercapto-functionalised silsesquioxane (SSQ-SH)

### Step 1 - Reactive solvent preparation

Mix the below to a homogenous solution at ambient conditions.

**Table 1: Composition of the reactive solvent mixture**

| Raw material | Quantity (mole equivalent) | Quantity (g) | Allowable range |
|---|---|---|---|
| Methanol | 1.25 | 510 | ± 5 % |
| Deionised water | 1.0 | 229.5 | ± 2 % |
| Catalyst | | 1.0 (HCl) | ± 5 % |
| Total | | 740.5 | |

After mixing, the solution is to be used within 30 minutes or stored in a sealed vessel at room temperature.

### Step 2 - PRE-HYDROLYSIS

Charge the vessel with 1 mole equivalent (2500 g) of the (3-Mercaptopropyl)-trimethoxysilane, add the reactive solvent from Step 1 at a rate of 60 l/min whilst mixing. The solution temperature should be monitored as the reaction is exothermic, the reaction vessel is nominally sealed to prevent solvent loss.

### Step 3 - Primary Condensation

The solution from Step 2 is sealed and aged at 65°C for 4 h according to the following process conditions.

**Table 2: Process conditions for primary condensation**

| **Condition** | **Target value** | **Range** |
|---|---|---|
| Temperature | 65 °C | ± 5 °C |
| Pressure | 1000 mbar | ± 30mbar |
| Time | 4 h | 0.1 h |
| Vessel material | Polypropylene | HDPE |

### Step 4 - Secondary Condensation and Resin recovery

### Solution mixture quantities

**Table 3: Mixing ratio for secondary condensation step**

| Raw material | Quantity (g) |
|---|---|
| Solution from Step 3 | 3240.5 |
| Deionised water | 6481 |
| Total | 9721.5 |

The solution from Step 3 is poured into deionised water whilst stirring. After 1 h vigorous stirring the mixture is allowed to settle and for the formation of two immiscible phases which are then separated by decanting/ draining. The silsesquioxane is the lower of the two phases.

### Step 5 - Resin drying

The silsesquioxane resin will contain residual alcohol and/or water which may affect transparency and shelf-life. The residuals can be removed by evaporation techniques such as heating the recovered resin at 65°C. The content can be measured gravimetrically or spectroscopically.

**Table 4: QC methods and targets for the resin**

| Property | Measurement method | Target value(Units) | Range |
|---|---|---|---|
| Viscosity | Viscometry | 2000 cP | ±500cP |
| Appearance | Visual | Clear | |
| Density | Picnometry | 1.16 g/cm⁻³ | ± 0.1 g / cm⁻³ |
| Molecular weight | GPC - SEC | 1500 | ± 500 |

The silsesquioxane produced has an average molecular weight of 1100 g/mole.

### Example 2: Fabrication sequence for mercapto-amine-functionalised silsesquioxane (SSQ-SH-NH₂)

### Step 1 - Reactive solvent preparation

Analogous to comparative example 1.

### Step 2 - PRE-HYDROLYSIS

Charge the vessel with 0.5 mole equivalent of 3-mercaptopropyl-trimethoxysilane and 0.5 mole equivalent of 3-isocyanatopropyl-triethoxysilane, add the reactive solvent from Step 1 at a rate of 60 l/min whilst mixing. The solution temperature should be monitored as the reaction is exothermic, the reaction vessel is nominally sealed to prevent solvent loss. According to the reaction conditions the unblocked isocyanate end-group is hydrolysed towards an amine functional end-group due to the water present in the reaction mixture leading to a mixed mercapto-amine-functionalised SSQ.

### Step 3 - Primary Condensation

Analogous to comparative example 1.

### Step 4 - Secondary Condensation and Resin recovery

Analogous to comparative example 1.

### Step 5 - Resin drying

Analogous to comparative example 1.

The silsesquioxane produced has an average molecular weight of 1200 g/mol.

### Example 3: Fabrication sequence for mercapto-blocked-isocyanato-functionalised silsesquioxane (SSQ-SH-NCO-B)

### Step 1 - Reactive solvent preparation

Analogous to comparative example 1.

### Step 2 - PRE-HYDROLYSIS

The blocked isocyanate function is obtained by reacting 3-iscyanatopropyl-triethoxysilane with 1,2,4-triazole. The blocking agent is used in a slightly super-stoichiometric amount (1/1.1) in order to ensure full conversion. 1,2,4-Triazole is initially charged under nitrogen atmosphere and melted at an oil bath temperature of 135 °C. 3-Iscyanatopropyl-triethoxysilane is added drop wise. The reaction time is 6 h and is monitored by IR spectroscopy by means of the isocyanate band. Subsequently the vessel is charged with 0.5 mole equivalent of 3-mercaptopropyl-trimethoxysilane and 0.5 mole equivalent of 1,2,4-triazole-blocked 3-isocyanatopropyl-trimethoxysilane and the reactive solvent from Step 1 is added at a rate of 60 l/min whilst mixing. The solution temperature should be monitored as the reaction is exothermic, the reaction vessel is nominally sealed to prevent solvent loss.

### Step 3 - Primary Condensation

Analogous to comparative example 1.

### Step 4 - Secondary Condensation and Resin recovery

Analogous to comparative example 1.

### Step 5 - Resin drying

Analogous to comparative example 1.

The silsesquioxane produced has an average molecular weight of 1900 g/mol.

### Comparative example 4: Cu/SSQ-SH 1/1 with NaBH₄ as reducing agent [CuV077]

0.6 g CuSO₄ • 5 H₂O have been dissolved in 120 ml ethylene-glycol and 2.69 g SSQ-SH in 4 g ethylene-glycol have been added. Subsequently NaBH₄ in ethylene-glycol has been added drop wise (0.55 g in 50 ml, 2 ml/min) and has been stirred for 2 h at 750 rpm. After 2 h the reaction mixture was heated to 120 °C and allowed to react for 16 h. For the cleaning the resulting mixture was centrifuged at 8000 rpm for 10 min and washed with ethylene-glycol, THF and ethanol. The retentate showed brown colour and was dried in vacuum at 40°C for 12 h.

### Comparative example 5: Cu/SSQ-SH 4/1 with NaBH₄ as reducing agent [CuV078]

0.6 g CuSO₄ • 5 H₂O have been dissolved in 120 ml ethylene-glycol and 0.67 g SSQ-SH in 2 g THF have been added. Subsequently NaBH₄ in ethylene-glycol has been added drop wise (0.55 g in 50 ml, 2 ml/min) and has been stirred for 2 h at 750 rpm. After 2 h the reaction mixture was heated to 120 °C and allowed to react for 6 h. For the cleaning the resulting mixture was centrifuged at 8000 rpm for 10 min and washed with ethylene-glycol and THF. The retentate showed brown colour and was dried in vacuum at 40°C for 12 h.

### Comparative example 6: Cu/SSQ-SH 4/1 with NaH₂PO₂ as reducing agent [CuV091]

0.6 g CuSO₄ • 5 H₂O have been dissolved in 120 ml ethylene-glycol and 0.67 g SSQ-SH in 2 g THF have been added. The mixture has been heated to 90 °C. Subsequently NaH₂PO₂ in ethylene-glycol has been added drop wise (0.98 g in 10 ml, 5 ml/min) and has been stirred for 4 min and quenched in a water bath. Furthermore 100 ml ice / water mixture has been added. After 2 h the reaction mixture was heated to 120 °C and allowed to react for 6 h. For the cleaning the resulting mixture was centrifuged at 10000 rpm for 10 min and washed with deionised water and ethanol (abs.). The retentate showed brown colour and was dried in vacuum at 40°C for 12 h.

### Comparative example 7: Cu/SSQ-SH 185/1 with ascorbic acid as reducing agent [CuV146]

125 g CuSO₄ • 5 H₂O have been dissolved in a mixture of 400 ml water / 100 ml ethanol and heated to 80 °C. 3.0 g SSQ-SH have been dissolved in 5 ml THF and added to the reaction mixture. 44 g ascorbic acid in 250 ml water have been added drop wise and allowed to stir for 24 h. For the cleaning the resulting mixture was centrifuged at 10000 rpm for 15 min and washed with deionised water and ethanol (abs.). The retentate showed brown colour and was dried in vacuum at 40°C for 12 h.

### Comparative example 8: Cu/SSQ-SH 16.7/1 with NaBH₄ as reducing agent [CuV094a]

0.3 g CuSO₄ • 5 H₂O have been dissolved in 60 ml ethylene-glycol and 0.08 g SSQ-SH in 5 ml toluene have been added. Subsequently NaBH₄ in ethylene-glycol has been added drop wise (0.25 g in 25 ml, 2 ml/min) and has been stirred for 2 h at 750 rpm. For the cleaning the resulting mixture was centrifuged at 10000 rpm for 10 min and washed with toluene and ethanol. The retentate showed brown colour and was dried in vacuum at 40°C for 12 h.

### Comparative example 9: Cu/SSQ-SH 33.5/1 with NaBH₄ as reducing agent [CuV094b]

0.3 g CuSO₄ • 5 H₂O have been dissolved in 60 ml ethylene-glycol and 0.04 g SSQ-SH in 5 ml toluene have been added. Subsequently NaBH₄ in ethylene-glycol has been added drop wise (0.25 g in 25 ml, 2 ml/min) and has been stirred for 2 h at 750 rpm. For the cleaning the resulting mixture was centrifuged at 10000 rpm for 10 min and washed with toluene and ethanol. The retentate showed brown colour and was dried in vacuum at 40°C for 12 h.

### Comparative example 10: Cu/SSQ-SH 66.9/1 with NaBH₄ as reducing agent [CuV094c]

0.3 g CuSO₄ • 5 H₂O have been dissolved in 60 ml ethylene-glycol and 0.02 g SSQ-SH in 5 ml toluene have been added. Subsequently NaBH₄ in ethylene-glycol has been added drop wise (0.25 g in 25 ml, 2 ml/min) and has been stirred for 2 h at 750 rpm. For the cleaning the resulting mixture was centrifuged at 10000 rpm for 10 min and washed with toluene and ethanol. The retentate showed brown colour and was dried in vacuum at 40°C for 12 h.

### Comparative example 11: Cu/SSQ-SH 133.8/1 with NaBH₄ as reducing agent [CuV094d]

0.3 g CuSO₄ • 5 H₂O have been dissolved in 60 ml ethylene-glycol and 0.01 g SSQ-SH in 5 ml toluene have been added. Subsequently NaBH₄ in ethylene-glycol has been added drop wise (0.25 g in 25 ml, 2 ml/min) and has been stirred for 2 h at 750 rpm. For the cleaning the resulting mixture was centrifuged at 10000 rpm for 10 min and washed with toluene and ethanol. The retentate showed brown colour and was dried in vacuum at 40°C for 12 h.

### Example 12: Cu/SSQ-SH-NH₂ 33/1 with ascorbic acid as reducing agent [CuV103]

0.6 g CuSO₄ • 5 H₂O have been dissolved in 60 ml water and heated to 80 °C. 0.08 g SSQ-SH-NH₂ have been dissolved in 1 ml THF and added to the reaction mixture. 6.36 g ascorbic acid in 40 ml water have been added drop wise and allowed to stir for 24 h. For the cleaning the resulting mixture was centrifuged at 10000 rpm for 15 min and washed with deionised water and ethanol (abs.). The retentate showed brown colour and was dried in vacuum at 40°C for 12 h.

### Example 13: Cu/SSQ-SH-NH₂ with ascorbic acid as reducing agent [CuV107]

2.5 g CuSO₄ • 5 H₂O have been dissolved in 50 ml water and heated to 80 °C. 0.09 g SSQ-SH-NH₂ have been dissolved in 2 ml THF and added to the reaction mixture. 8.8 g ascorbic acid in 50 ml water have been added drop wise and allowed to stir for 16 h. For the cleaning the resulting mixture was centrifuged at 10000 rpm for 15 min and washed with deionised water and ethanol (abs.). The retentate showed brown colour and was dried in vacuum at 40°C for 12 h.

### Example 14: Cu/SSQ-SH-NH₂ with NaBH₄ as reducing agent [CuV109]

0.3 g CuSO₄ • 5 H₂O have been dissolved in 60 ml ethanol and 0.08 g SSQ-SH-NH₂ in 2 ml THF have been added. Subsequently NaBH₄ in ethanol has been added drop wise (0.8 g in 40 ml, 2 ml/min) and has been stirred for 2 h at 750 rpm. After 2 h the reaction mixture was heated to 120 °C and allowed to react for 6 h. For the cleaning the resulting mixture was centrifuged at 8000 rpm for 10 min and washed with ethanol and deionised water. The retentate showed brown colour and was dried in vacuum at 40°C for 12 h.

### Comparative example 15: Cu/SSQ-SH 1/0 with ascorbic acid as reducing agent [CuV140]

125 g CuSO₄ • 5 H₂O have been dissolved in 500 ml water and heated to 80 °C. 44 g ascorbic acid in 250 ml water have been added dropwise (5 ml / min) and allowed to stir for 16 h. For the cleaning the resulting mixture was centrifuged at 10000 rpm for 15 min and washed with deionised water and ethanol (abs.). The retentate showed brown colour and was dried in vacuum at 40°C for 12 h.

### Comparative example 16: Cu/SSQ-SH 1/0.75 with ascorbic acid as reducing agent [CuV140-SH_1] [Cu/SSQ-SH_1]

5 g [CuV140] have been re-dispersed in 700 ml water and mixed with 1 g SSQ-SH in 2.4 ml THF and stirred for 24h. For the cleaning the resulting mixture was centrifuged at 10000 rpm for 15 min and washed with deionised water and ethanol (abs.). The retentate showed brown colour and was dried in vacuum at 40°C for 12 h.

### Comparative example 17: Cu/SSQ-SH 1/1.26 with ascorbic acid as reducing agent [CuVl40-SH-2] [Cu/SSQ-SH_2]

5 g [CuV140] have been re-dispersed in 700 ml water and mixed with 1.66 g SSQ-SH in 4 ml THF and stirred for 24h. For the cleaning the resulting mixture was centrifuged at 10000 rpm for 15 min and washed with deionised water and ethanol (abs.). The retentate showed brown colour and was dried in vacuum at 40°C for 12 h.

### Comparative example 18: Cu/SSQ-SH 1/1.84 with ascorbic acid as reducing agent [CuV140-SH_3] [Cu/SSQ-SH_3]

5 g [CuV140] have been re-dispersed in 700 ml water and mixed with 2.5 g SSQ-SH in 6 ml THF and stirred for 24h. For the cleaning the resulting mixture was centrifuged at 10000 rpm for 15 min and washed with deionised water and ethanol (abs.). The retentate showed brown colour and was dried in vacuum at 40°C for 12 h.

While the present inventions have been described and illustrated in conjunction with a number of specific embodiments, those skilled in the art will appreciate that variations and modifications may be made without departing from the principles of the inventions as herein illustrated, as described and claimed. The present inventions may be embodied in other specific forms without departing from their spirit or essential characteristics. The described embodiments are considered in all respects to be illustrative and not restrictive. The scope of the inventions are, therefore, indicated by the appended claims, rather than by the foregoing description. All changes which come within the meaning and range of equivalence of the claims are to be embraced within their scope.

**Table 5**

| **Sample** | **C [wt.-%]** | **S [wt.-%]** | **N [wt.-%]** |
|---|---|---|---|
| CuV140 * | 12.50 ± 1.19 | - | - |
| CuV077 * | 26.44 ± 0.23 | 19.22 ± 0.04 | - |
| CuV078 * | 23.85 ± 0.13 | 15.37 ± 0.44 | - |
| CuV091 * | 17.79 ± 0.56 | 13.47 ± 0.26 | - |
| CuV146 * | 8.94 ± 0.52 | 3.57 ± 0.41 | - |
| CuV094a * | 16.04 ± 0.13 | 12.19 ± 0.27 | - |
| CuV094b * | 11.40 ± 0.10 | 8.67 ± 0.02 | - |
| CuV094c * | 7.63 ± 0.13 | 5.89 ± 0.16 | - |
| CuV094d * | 6.43 ± 0.29 | 5.10 ± 0.25 | - |
| CuV103 | 10.78 ± 0.92 | 4.84 ± 0.47 | 0.51 ± 0.06 |
| CuV107 | 9.35 ± 0.89 | 1.63 ± 0.13 | 0.19 ± 0.01 |
| CuV109 | 7.70 ± 0.93 | 1.24 ± 0.15 | 0.46 ± 0.02 |

**Table 6**

| **Sample** | **C [wt.-%]** | **S [wt.-%]** |
|---|---|---|
| CuV140 * | 12.50 ± 1.19 | - |
| CuV140-SH_1 * | 9.77 ± 2.03 | 3.35 ± 0.38 |
| CuV140-SH_2 * | 7.50 ± 1.47 | 4.70 ± 0.86 |
| CuV140-SH_3 * | 5.99 ± 1.91 | 3.28 ± 1.03 |

## Claims

1. Method for production of surface modified metal-colloids comprising the following steps:
a) mixing at least one metal salt, at least one organosilsesquioxane having at least one functional group affine to the metal of said metal salt and at least one further group; at least one reducing agent and at least one solvent;
b) thermal and/or photochemical treatment to induce the reducing of the metal of the metal salt;
c) formation of metal colloids surface modified with the at least one organosilsesquioxane.
or
a) disperging at least one metal colloid in at least one solvent;
b) adding at least one organosilsesquioxane having at least one functional group affine to the metal colloid and at least one further group,
wherein the at least one organosilsesquioxane in a) (first alternative) is produced, by hydrolysis, wherein prior to complete condensation the condensation is quenched with an excess of water, and for both alternatives wherein the organosilsesquioxane comprises at least two different non-hydrolysable groups bound to different Si-atoms of the silsesquioxanes and wherein the reduction agent is selected from the group comprising hydrazine or hydrazine derivatives, borohydrides, ascorbic acid, malic acid, oxalic acid, formic acid, citric acid, salts thereof, Na₂SO₃, Na₂S₂O₃, mercaptanes, amines, hypophosphites, sugars.

2. Method according to claim 1, **characterized in that** the organosilsesquioxane is produced by partially hydrolyzing a hydrolysable monomer precursor comprising at least 50 mole% of hydrolysable monomer precursors having the formula RSiX₃, in which R is an organic group which is stable to hydrolysis and later forms the organic group bound to Si of the organosilsesquioxane, each X is the same or different to each other X group and is selected from chemically reactive groups such that each Si-X bond is hydrolysable to form a Si-OH bond, in presence of a mineral acid catalyst and prior to complete condensation quenching the liquid composition with an excess of water.

3. Method according to claim 1 or 2, **characterized in that**, the functional group affine to the metal comprises at least one heteroatom selected from the group N, S, O, Cl, Br or I.

4. Method according to one of the claim 1 to 3, **characterized in that**,
the organosilsesquioxane comprises at least one group by way of which crosslinking is possible, which is different to the group affine to the metal of said metal salt.

5. Method according to one of the claims 1 to 4, **characterized in that**,
the silsesquioxane has an average molecular weight lower than 7000 g/mol.

6. Method according to one of the claims 1 to 5, **characterized in that**,
the metal salt comprises at least one metal ion selected from the metals of groups 8 to 16.

7. Method according to one of the claims 1 to 6 **characterized in that** the metal salt comprises Cu ions.

8. Method according to one of the claims 1 to 7, **characterized in that** the functional group affine to the metal is selected from the group comprising amino groups, hydroxyl groups, epoxy groups, methyl or ethyl ether groups, carbonyl groups, thiol groups, disulfide groups, methyl or ethyl thioether groups, carboxylic acids, amide groups, anhydride groups, aromatic groups, heteroaromatic groups, sulfonyl groups, 1,2 or 1,3 carbonyl groups.

9. Method according to one of the claims 1 to 8, **characterized in that** the organosilsesquioxanes of the invention comprise as functional groups, mercapto and alkyl groups, mercapto and vinyl groups, mercapto and blocked isocyanato groups, mercapto and amino groups, epoxy and alkyl groups, mercapto and alkyl and vinyl groups, mercapto and alkyl and amino groups, mercapto and alkyl and blocked isocyanato groups.

10. Method according to claim 7, **characterized in that** the organosilsesquioxanes of the invention comprise as functional groups, mercapto and alkyl groups, mercapto and vinyl groups, mercapto and blocked isocyanato groups, mercapto and amino groups, epoxy and alkyl groups, mercapto and alkyl and vinyl groups, mercapto and alkyl and amino groups, mercapto and alkyl and blocked isocyanato groups and the metal salt comprises only Cu ions.

11. Metal colloids obtainable by any of the previous method claims.

12. Moulded body or coating comprising at least one metal colloid according to claim 11.

13. Use of the metal colloids according to claim 11 in coatings, paints, powder coatings, master batches, inks, textiles, polymers, compounds, electronic applications, conductive coatings, medical devices or implants.

## Patentansprüche

1. Verfahren zur Herstellung von oberflächenmodifizierten Metall-Kolloiden, das die folgenden Schritte umfasst:
a) Mischen mindestens eines Metallsalzes, mindestens eines Orgasilsesquioxans mit mindestens einer funktionellen Gruppe mit Affinität zum Metall des Metallsalzes und mindestens einer weiteren Gruppe; mindestens eines Reduktionsmittels und mindestens eines Lösungsmittels;
b) thermische und/oder photochemische Behandlung, um die Reduktion des Metalls des Metallsalzes zu induzieren;
c) Bildung von Metallkolloiden, die mit dem mindestens einen Organosilsesquioxan oberflächenmodifiziert sind
oder
a) Dispergieren mindestens eines Metallkolloids in mindestens einem Lösungsmittel;
b) Zugabe von mindestens einem Organosilsesquioxan mit mindestens einer zu dem Metallkolloid affinen funktionellen Gruppe und mindestens einer weiteren Gruppe,
wobei das mindestens eine Organosilsesquioxan in a) (erste Alternative) durch Hydrolyse hergestellt wird, wobei vor der vollständigen Kondensation die Kondensation mit einem Überschuss an Wasser gequencht wird, und für beide Alternativen, wobei das Organosilsesquioxan mindestens zwei verschiedene, nicht hydrolysierbare Gruppen umfasst, die an verschiedene Si-Atome der Silsesquioxane gebunden sind, und wobei das Reduktionsmittel aus der Gruppe ausgewählt ist, die Hydrazin oder Hydrazinderivate, Borhydride, Ascorbinsäure, Apfelsäure, Oxalsäure, Ameisensäure, Zitronensäure, Salze davon, Na₂SO₃, Na₂S₂O₃, Mercaptane, Amine, Hypophosphite, Zucker umfasst.

2. Verfahren nach Anspruch 1, **dadurch gekennzeichnet, daß** das Organosilsesquioxan durch teilweise Hydrolyse eines hydrolysierbaren Monomervorläufers hergestellt wird, der mindestens 50 Mol-% hydrolysierbare Monomervorläufer mit der Formel RSiX₃ umfaßt, in der R eine organische Gruppe ist, die hydrolysestabil ist und später die an Si des Orgasilsesquioxans gebundene organische Gruppe bildet, jedes X gleich oder verschieden von jeder anderen X-Gruppe ist und aus chemisch reaktiven Gruppen ausgewählt ist, so dass jede Si-X-Bindung hydrolysierbar ist, um eine Si-OH-Bindung zu bilden, in Gegenwart eines Mineralsäure-Katalysators und vor der vollständigen Kondensation und Quenchen der flüssigen Zusammensetzung mit einem Überschuss an Wasser.

3. Verfahren nach Anspruch 1 oder 2, **dadurch gekennzeichnet, dass**,
die zum Metall affine funktionelle Gruppe mindestens ein Heteroatom, ausgewählt aus der Gruppe N, S, O, Cl, Br oder I, umfasst.

4. Verfahren nach einem der Ansprüche 1 bis 3, **dadurch gekennzeichnet, dass**,
das Organosilsesquioxan mindestens eine Gruppe umfasst, über die eine Vernetzung möglich ist, die sich von der metallaffinen Gruppe des Metallsalzes unterscheidet.

5. Verfahren nach einem der Ansprüche 1 bis 4, **dadurch gekennzeichnet, dass**,
das Silsesquioxan ein durchschnittliches Molekulargewicht von weniger als 7000 g/mol hat.

6. Verfahren nach einem der Ansprüche 1 bis 5, **dadurch gekennzeichnet, dass**,
das Metallsalz mindestens ein Metallion umfasst, das aus den Metallen der Gruppen 8 bis 16 ausgewählt ist.

7. Verfahren nach einem der Ansprüche 1 bis 6, **dadurch gekennzeichnet, daß** das Metallsalz Cu-Ionen enthält.

8. Verfahren nach einem der Ansprüche 1 bis 7, **dadurch gekennzeichnet, daß** die metallaffine funktionelle Gruppe ausgewählt ist aus der Gruppe bestehend aus Aminogruppen, Hydroxylgruppen, Epoxygruppen, Methyl- oder Ethylethergruppen, Carbonylgruppen, Thiolgruppen, Disulfidgruppen, Methyl- oder Ethylthioethergruppen, Carbonsäuren, Amidgruppen, Anhydridgruppen, aromatischen Gruppen, heteroaromatischen Gruppen, Sulfonylgruppen, 1,2- oder 1,3-Carbonylgruppen.

9. Verfahren nach einem der Ansprüche 1 bis 8, **dadurch gekennzeichnet, daß** die Organosilsesquioxane der Erfindung als funktionelle Gruppen, Mercapto- und Alkylgruppen, Mercapto- und Vinylgruppen, Mercapto- und blockierte Isocyanatogruppen, Mercapto- und Aminogruppen, Epoxy- und Alkylgruppen, Mercapto- und Alkyl- und Vinylgruppen, Mercapto- und Alkyl- und Aminogruppen, Mercapto- und Alkyl- und Aminogruppen, Mercapto- und Alkyl- und blockierte Isocyanatogruppen umfassen.

10. Verfahren nach Anspruch 7, **dadurch gekennzeichnet, dass** die Organosilsesquioxane der Erfindung als funktionelle Gruppen Mercapto- und Alkylgruppen, Mercapto- und Vinylgruppen, Mercapto- und blockierte Isocyanatogruppen, Mercapto- und Aminogruppen, Epoxy- und Alkylgruppen, Mercapto- und Alkyl- und Vinylgruppen, Mercapto- und Alkyl- und Aminogruppen, Mercapto- und Alkyl- und Aminogruppen, Mercapto- und Alkyl- und blockierte Isocyanatogruppen umfassen und das Metallsalz nur Cu-Ionen enthält.

11. Metallkolloide, die nach einem der vorstehenden Verfahrensansprüche erhältlich sind.

12. Formkörper oder Beschichtung mit mindestens einem Metallkolloid nach Anspruch 11.

13. Verwendung der Metallkolloide nach Anspruch 11 in Beschichtungen, Farben, Pulverlacken, Masterbatches, Tinten, Textilien, Polymeren, Verbindungen, elektronischen Anwendungen, leitfähigen Beschichtungen, medizinischen Geräten oder Implantaten.

## Revendications

1. Procédé pour la production de colloïdes métalliques modifiés en surface comprenant les étapes suivantes :
a) mélange d'au moins un sel métallique, d'au moins un organosilsesquioxane possédant au moins un groupe fonctionnel affine au métal dudit sel métallique et au moins un groupe supplémentaire ; au moins un agent réducteur et au moins un solvant ;
b) traitement thermique et/ou photochimique pour induire la réduction du métal du sel métallique ;
c) formation de colloïdes métalliques modifiés en surface par l'au moins un organosilsesquioxane,
ou
a) dispersion d'au moins un colloïde métallique dans au moins un solvant ;
b) ajout d'au moins un organosilsesquioxane possédant au moins un groupe fonctionnel affine au colloïde métallique et au moins un groupe supplémentaire,
l'au moins un organosilsesquioxane dans a) (première variante) étant produit, par hydrolyse, avant la condensation complète, la condensation étant stoppée avec un excès d'eau, et pour les deux variantes l'organosilsesquioxane comprenant au moins deux groupes différents non hydrolysables liés à des atomes de Si différents des silsesquioxanes et l'agent de réduction étant choisi dans le groupe comprenant l'hydrazine ou des dérivés d'hydrazine, des borohydrures, l'acide ascorbique, l'acide malique, l'acide oxalique, l'acide formique, l'acide citrique, des sels correspondants, Na₂SO₃, Na₂S₂O₃, des mercaptans, des amines, des hypophosphites, des sucres.

2. Procédé selon la revendication 1, **caractérisé en ce que** l'organosilsesquioxane est produit par l'hydrolyse partielle d'un précurseur de monomère hydrolysable comprenant au moins 50 % en moles de précurseurs de monomère hydrolysables possédant la formule RSiX₃, dans laquelle R est un groupe organique qui est stable à l'hydrolyse et forme après le groupe organique lié à Si de l'organosilsesquioxane, chaque X étant identique ou différent à chaque autre groupe X et étant choisi parmi des groupes chimiquement réactifs tels que chaque liaison Si-X est hydrolysable pour former une liaison Si-OH, en présence d'un catalyseur de type acide minéral et avant l'arrêt de la condensation complète de la composition liquide avec un excès d'eau.

3. Procédé selon la revendication 1 ou 2, **caractérisé en ce que** le groupe fonctionnel affine au métal comprend au moins un hétéroatome choisi dans le groupe N, S, O, Cl, Br et I.

4. Procédé selon l'une des revendication 1 à 3, **caractérisé en ce que** l'organosilsesquioxane comprend au moins un groupe par l'intermédiaire duquel une réticulation est possible, qui est différent du groupe affine au métal dudit sel métallique.

5. Procédé selon l'une des revendications 1 à 4, **caractérisé en ce que** le silsesquioxane possède un poids moléculaire moyen inférieur à 7 000 g/mole.

6. Procédé selon l'une des revendications 1 à 5, **caractérisé en ce que** le sel métallique comprend au moins un ion métallique choisi parmi les métaux des groupes 8 à 16.

7. Procédé selon l'une des revendications 1 à 6 **caractérisé en ce que** le sel métallique comprend des ions Cu.

8. Procédé selon l'une des revendications 1 à 7, **caractérisé en ce que** le groupe fonctionnel affine au métal est choisi dans le groupe comprenant les groupes amino, les groupes hydroxyle, les groupes époxy, les groupes méthyléther ou éthyléther, les groupes carbonyle, les groupes thiol, les groupes disulfure, les groupes méthylthioéther ou éthylthioéther, les acides carboxyliques, les groupes amide, les groupes anhydride, les groupes aromatiques, les groupes hétéroaromatiques, les groupes sulfonyle, les groupes 1,2-carbonyle ou 1,3-carbonyle.

9. Procédé selon l'une des revendications 1 à 8, **caractérisé en ce que** les organosilsesquioxanes de l'invention comprennent, en tant que groupes fonctionnels, des groupes mercapto et alkyle, des groupes mercapto et vinyle, des groupes mercapto et isocyanato bloqué, des groupes mercapto et amino, des groupes époxy et alkyle, des groupes mercapto et alkyle et vinyle, des groupes mercapto et alkyle et amino, des groupes mercapto et alkyle et isocyanato bloqué.

10. Procédé selon la revendication 7, **caractérisé en ce que** les organosilsesquioxanes de l'invention comprennent, en tant que groupes fonctionnels, des groupes mercapto et alkyle, des groupes mercapto et vinyle, des groupes mercapto et isocyanato bloqué, des groupes mercapto et amino, des groupes époxy et alkyle, des groupes mercapto et alkyle et vinyle, des groupes mercapto et alkyle et amino, des groupes mercapto et alkyle et isocyanato bloqué et le sel métallique comprenant seulement des ions Cu.

11. Colloïdes métalliques pouvant être obtenus par l'une quelconque parmi les revendications de procédé précédentes.

12. Corps moulé ou revêtement comprenant au moins un colloïde métallique selon la revendication 11.

13. Utilisation des colloïdes métalliques selon la revendication 11 dans des revêtements, des peintures, des revêtements en poudre, des mélanges maîtres, des encres, des textiles, des polymères, des composés, des applications électroniques, des revêtements conducteurs, des dispositifs ou des implants médicaux.
